# EUROPEAN PATENT SPECIFICATION

(11) **EP 4 577 323 B1**
(45) Date of publication and mention of the grant of the patent: **05.08.2026**
(21) Application number: 23757952.9
(22) Date of filing: 22.08.2023
(51) Int. Cl.: B01D 19/00, F24D 19/02

(54) **LOW PRESSURE DEGASSING DEVICE**
NIEDERDRUCKENTGASUNGSVORRICHTUNG
DISPOSITIF DE DÉGAZAGE BASSE PRESSION

(30) Priority: 22.08.2022 NL 1044400
(43) Date of publication of application: 02.07.2025
(73) Proprietor: Aalberts hfc B.V., 1358 DB Almere (NL)
(72) Inventor: CNOSSEN, Jan Henk, 8723 CP KOUDUM (NL)
(74) Representative: EP&C
(86) International application number: PCT/EP2023/073063
(87) International publication number: WO 2024/042097

(56) References cited:
- EP-A1- 3 036 025
- EP-B1- 3 036 025
- WO-A1-2017/184050
- US-A- 4 602 923
- US-A- 4 718 922
- US-A- 5 601 635
- US-B1- 6 447 579
- US-B2- 7 850 767

## Description

### FIELD OF THE INVENTION

The invention relates to the field of degassing a gas-containing liquid in a cooling or heating installation and in particular to a device and a method for degassing the liquid.

### BACKGROUND OF THE INVENTION

In the field of degassing liquids, various devices and methods exist.

EP3036025A1 discloses a device that is configured to degas a liquid in a fluid system. A part of a liquid in a main flow channel is branched off and is subsequently passed through a filter, an actuated valve, a non-return valve, a reservoir, a pump, and another non-return valve before returning to the main flow channel. When the reservoir is filled to a desired level, the actuated valve is closed, and the pump is operated to lower the pressure in the reservoir to release gasses from the liquid.

A drawback of this device is that a pump must be operated together with an actuated valve. In order to do so, a relatively complex control mechanism needs to be in place. Further, because pumps are generally loud and inefficient, the device is believed to be less suited for domestic use.

US2011214571A1 discloses a degassing device that makes use of a vacuum chamber to locally reduce pressure in order to separate gasses from a liquid. The device comprises a channel through which the liquid flows, wherein the liquid also passes through a vacuum chamber. In this vacuum chamber, the main flow channel is delimited by a permeable region through which gasses may pass but the liquid may not.

Outside of this permeable region, an enclosure is located to which a vacuum pump is connected. This vacuum pump has been configured to create a continuous vacuum level in the enclosure in order for the liquid to degas. Further, a vent is connected to the enclosure to permit a venting flow to enter the vacuum chamber to reduce condensation within the enclosure.

In the present invention, it has been recognized that such a device presents several drawbacks. The use of a permeable region allows a certain amount of liquid to migrate into the enclosure causing contamination of the enclosure, and therewith contamination of the vacuum pump, and over time may reduce the amount of liquid in the main flow channel. Further, over time, the permeable region will also degrade due to a build-up of contaminants. This build-up prevents gas passing through, ultimately leading to degassing no longer being possible.

Also, because a continuous vacuum is required to operate the device, the device will likely consume a lot of energy. Further, a vent that feeds gas from the outside to the enclosure will only lead to the vacuum pump needing to work harder to maintain the desired vacuum level and consuming even more energy.

Additionally, a vacuum pump makes a lot of noise and a continuously operating pump even more so. This makes is less suitable for domestic applications.

EP3764001A1 discloses a device wherein a portion of a main flow is branched off through a bypass, flows through a venturi device and enters a degassing chamber. On another side of the degassing chamber, the branched off portion is returned to the main flow.

Additionally, a degassing conduit leads from a suction area to the bypass and joins the bypass in the venturi device. In this degassing conduit the pressure is lower than in the rest of the circuit because of the venturi device. The lower pressure causes the dissolved gasses to separate, and the gases can then be evacuated through a ventilator in the degassing chamber.

A drawback of the device is that the liquid in the circuit must always be moving at a certain velocity to make the venturi device work by creating a pressure difference between the return flow and the branch flow. If the velocity is not sufficient an extra pump is needed to create the pressure difference. This results in either a not optimally working device or in an expensive device due to the need of an extra pump. Such a pump would also increase the energy consumption of the device.

Additionally, because the system is dependent on the velocity of the liquid in the circuit it may be difficult to control the pressures in the system and therewith the degassing process.

US4602923A discloses an apparatus for degasifying a liquid medium. The apparatus comprises a non-return gas valve 41 which is used to prevent air from flowing in while allowing separated gas to flow out (col. 5 In. 44-49). Herein, the non-return gas valve 41, the exhaust gas valve 40 and the floater that closes off the device from the outside are located above a possible liquid level. D1 has a disadvantage in this respect, namely that the degasification is quite inefficient as a result of the air inside the degasification zone, which hinders the depressurization. During depressurization of the degasification zone, the air in the degasification zone will expand, reducing the pressure drop in the degasification zone and thereby reducing the efficacy of degasification. Another degassing device is disclosed in US4718922.

### OBJECT OF THE INVENTION

It is an object of the invention to provide a device and a method for degassing a liquid and, in doing so, overcoming at least one of the abovementioned drawbacks.

### SUMMARY OF THE INVENTION

In order to achieve the object, the present invention provides a degassing device for degassing a gas-containing liquid in a cooling or heating installation, the degassing device comprising:
- a manifold extending between a first fluid connection and a second fluid connection, wherein in operation a flow of liquid flows through the manifold from the first fluid connection to the second fluid connection or vice versa,
- at least one flow passage extending from the manifold to a degasification zone, the flow passage being configured to allow fluid communication between the manifold and the degasification zone,
- a degasification housing defining an inner volume, wherein the inner volume substantially corresponds to the degasification zone,
- a pressure reduction device connected to the degasification housing, wherein during operation, the pressure reduction device is configured to lower the pressure in the degasification zone relative to the pressure of the flow in the manifold.
wherein:
∘ the pressure reduction device comprises a piston, a cylinder, and a piston actuator and wherein the piston is moveable between an extended idle pressure position and a retracted low pressure position and wherein a frontal cylinder volume in front of the cylinder is in fluid communication with the inner volume and the degasification zone comprises the frontal cylinder volume,
∘ in the low pressure position of the piston the degasification zone extends into the cylinder and is larger than in the idle pressure position of the piston,
∘ **the degasification** zone is delimited by the degasification housing, and by at least part of an outer surface of the piston and/or by at least a part of the inner surface of the cylinder.

- at least one valve which is moveable between a closed position and an open position, wherein in the closed position the valve obstructs the flow passage, and closes off the degasification zone from the flow in the manifold, wherein in the open position the at least one valve does not obstruct the flow passage,
- a gas outlet in the degasification housing, the gas outlet comprising:
   ∘ an outlet tube and an outlet closing body, wherein the outlet tube is closable by the outlet closing body,
   ∘ an overflow valve defining a gas outlet opening, wherein the overflow valve is configured to close the gas outlet opening when a liquid level in the degassing device is higher than an overflow threshold level, and wherein the overflow threshold level is higher than the outlet closing body,
- a control unit to control at least the movement of the piston in order to carry out a degassing cycle,
wherein the control unit is configured to carry out a degassing cycle, by carrying out:
- a pressure reduction step, during which the gas outlet and the at least one valve are closed, wherein the pressure reduction device is configured to degas the gas-containing liquid by reducing the pressure, wherein at a start of the pressure reduction step, a liquid level in the degassing device is at the overflow threshold level and the outlet closing body closes off the outlet tube before the liquid level falls below the outlet tube,
- a gas expulsion step, during which the pressure in the degasification zone is increased and separated gas is passed through the outlet tube and the gas outlet opening.

The present invention results in efficient degassing. Because the outlet closing body is arranged below the overflow threshold level and closes off the outlet tube before the liquid level falls below the outlet tube, the outlet closing body is always submerged (under the liquid level) during degasification. There is thus no or little air (gas) in the degasification zone, as there is no or little air under the outlet closing body when it closes the outlet. As a result, the compressibility (or perhaps the negative compressibility) of the media in the degasification zone is low, such that for a given stroke length of the piston, a large pressure reduction is achieved in the degasification zone. This results in an efficient pressure reduction step which in turn results in an efficient degasification. The control unit may comprise mechanical, electronical and/or digital means. The control unit may communicate via a wired or wireless connection with other devices and/or a user, for example for sending data about the degassing device or other data or for receiving commands or inputs. The control unit may carry out a degassing cycle at set time intervals or points in time. Alternatively or additionally, the control unit may carry out a degassing cycle dependent on input such as user input or measurement data.

The piston actuator may be one of a mechanical actuator, electrical actuator, magnetic actuator, hydraulic actuator, and pneumatic actuator. By moving the piston from the idle pressure position to the low pressure position, the degasification zone is pulled into the cylinder and becomes larger than in the idle pressure position of the housing. The cylinder may be part of the housing. Because the volume of the degasification zone increases while the content of the degasification zone, i.e., the amount of liquid inside the degasification zone, remains substantially the same, the pressure to which the liquid in the degasification zone is subjected is reduced. The reduced pressure causes the liquid to degas. In an embodiment, the overflow valve is configured to open the gas outlet opening when the liquid level in the degassing device is lower than the overflow threshold level. This way, gas can escape from the degassing device.

In an embodiment, the outlet closing body comprises a gas outlet valve that allows gas and/or liquid to flow between the outside and the degasification zone in an open state, and closes off the degasification zone in a closed position, in particular the gas outlet valve being a ball valve or a non-return valve. In doing so the entire degasification zone can be filled with liquid and the degassing of the liquid can be performed more efficiently than in a situation where more liquid and/or more gas would initially be present, because the pressure reduction can be attained more easily and faster.

In an embodiment:
- the outlet closing body comprises a outlet closing non-return valve, and the outlet closing non-return valve is preferably actuated by an actuator,
- the piston comprises an actuator end,
- the outlet closing non-return valve is actuated by the actuator end of the piston, wherein when the piston is moved to the idle pressure position, the actuator end moves the outlet closing non-return valve to the open position, and wherein when the piston is moved to the retracted position, the outlet closing non-return valve is allowed to move to the closed position.

In this embodiment, gas is allowed to escape from the degasification zone when the pressure inside the degasification zone becomes too high, for example due to overheating or overfilling of the heating system. At the same time, no gas is allowed to enter the degasification zone as due to the action of the non-return valve. In the preferred embodiment, the outlet closing non-return valve is actuated such that it can be forced open, for example to let out gas released from the liquid during degassing. This provides good control of the degassing operation.

In an embodiment, the gas outlet further comprises a floater chamber and a floater moveable between a floating position and a lower position, wherein a lower part of the floater forms at least part of the outlet closing body, wherein in particular an upper part of the floater above the liquid level does not form part of the outlet closing body, wherein when liquid levels drops below a predetermined liquid level, the outlet closing body engages an end of the outlet tube in the lower position, closing off the outlet tube.

In this embodiment, a normally submerged part of the floater forms at least part of the outlet closing body. When the piston is retracted for degassing, the volume in the degasification zone increases. This pulls in liquid from the floater chamber, lowering the liquid level in the floater chamber. When the liquid level in the floater chamber drops below a predetermined level, such as the overflow threshold level, the part of the floater that is normally submerged when the floater is in floating condition (the referenced lower part of the floater) engages an end of the outlet tube in the lower position, closing off the outlet tube and thereby closing the degasification zone. Not only does the floater replace the need for an actively operated gas outlet valve, by closing off the outlet tube as soon as or even before the liquid has flown out of the outlet tube, the floater reduces the amount of free gas inside the degasification zone. This, in turn, facilitates the reduction of pressure and may increase the amount of gas that can be separated from the gas-containing liquid.

In an embodiment, the floater chamber comprises the overflow valve defining a gas outlet opening and wherein when a liquid level is higher than the overflow threshold level, the outlet closing body (i.e. the submerged part of the floater) is moved to an upper position, closing the overflow valve. The floater comprises the outlet closing body and thus moves along with the outlet closing body. The floater operates the overflow valve, either directly by closing it off with the floater body or indirectly via a connection to the overflow valve. In doing so, when an amount of liquid flowing into the degasification housing risks overflowing the degasification housing, the gas outlet opening is closed off by the floater inhibiting the liquid to spill out of the degassing device. Thereafter, the liquid will either stop flowing in through the branch flow passage or will enter through the branch flow passage and will flow out through the return flow passage. The overflow valve may also be referred to as a float valve.

In an embodiment, the outlet closing body comprises a protrusion extending from the floater, the protrusion being configured to close off the outlet tube and being located on a lower side of the floater, and wherein an outer dimension of the protrusion substantially matches an inner dimension of the outlet tube. Such a protrusion may increase the sealing capabilities of the floater, improving sealing of the degasification zone during degassing.

In an embodiment, the floater comprises a second protrusion extending from the floater, and an outer dimension of the second protrusion substantially matches an inner dimension of the gas outlet opening and wherein when the liquid level is at the second predetermined level, the protrusion is forced into the gas outlet opening.

In an embodiment, the outlet closing body comprises an O-ring or a double lip seal to close off the outlet tube in the lower position and/or an O-ring to close off the gas outlet in the upper position. In the lower position, the O-ring defines the closing location. This can provide improved sealing of the degasification zone during degassing.

In an embodiment, the at least one valve comprises a first valve which is moveable between a closed position and an open position, wherein in the closed position the first valve obstructs the at least one flow passage and closes off the degasification zone from the manifold and wherein in the open position the first valve does not obstruct the at least one flow passage, wherein the first valve is integrated in the piston, wherein the piston comprises a part which obstructs the flow passage in the low pressure position, wherein the movement of the piston from the idle pressure position towards the low pressure position moves the first valve from the open position to an idle closed position. Because the first valve is integrated into the piston, relatively few powered moving parts are required, while good control over the functional (i.e., moving) components is achieved. This contributes to a reliable and relatively uncomplicated system.

In an embodiment, the piston is configured to obstruct the flow passage in at least one position between the idle pressure position and the low pressure position. This way, the degasification can be performed efficiently over the part of the stroke of the piston where the first valve is closed, i.e. the part of the stroke between the piston position where the first valve reaches the idle closed position and the fully retracted position of the piston.

In an embodiment, the device comprises two flow passages, a first flow passage being a branch flow passage, the branch flow passage being configured to branch off a branch flow from the flow in the manifold, and a second flow passage being a return flow passage extending between the degasification zone and the manifold, the return flow channel being configured to return a return flow to the manifold.

By branching off a portion of the flow in a cooling or heating installation and by obstructing the branch flow passage and/or the return flow passage, the pressure reduction device can reduce the pressure to which the branched off portion, i.e., the branch flow, is subjected. When the pressure is reduced to a level below the pressure inside the flow in the manifold, gasses that are dissolved in the liquid will become less soluble and will separate from the liquid. The gasses that have been separated from the liquid can then be removed from the degassing device before the liquid re-joins the flow in the manifold. In doing so, the amount of dissolved gas in the liquid in the cooling or heating installation can be reduced.

In an embodiment, the branch flow passage is arranged at a same branch flow path length from the first fluid connection and the second fluid connection, wherein the return flow passage is arranged at a same return flow path length from the first fluid connection and the second fluid connection.

Because the branch flow passage and the return flow passage are each arranged between the first fluid connection and the second fluid connection at same respective path lengths, the direction of fluid flow between the first fluid connection and the second fluid connection does not influence the pressure difference between the branch flow passage and the return flow passage. The degassing device may thus be used with fluid flowing from the first fluid connection to the second fluid connection or vice versa and will have a similar performance for both flow directions. In this way the degassing device is bi-directional.

In an embodiment, the degassing device comprises a flow member arranged in the manifold, wherein the flow member is configured to urge liquid flowing along the flow member via the branch flow passage into the degasification zone, preferably independent of a flow direction of the liquid from the first fluid connection to the second fluid connection or vice versa.

The flow member urges liquid into the branch flow passage, independently of the flow direction. The degassing device may thus be used with liquid flowing from the first fluid connection to the second fluid connection or vice versa.

In an embodiment, the flow member comprises a branch flow separator, the branch flow separator in operation protruding into a flow of liquid from the first fluid connection to the second fluid connection or vice versa, wherein the flow separator is configured to branch off a portion of said flow of liquid into the degasification zone, and/or the manifold comprises a main flow valve configured to branch off a portion of said flow into the degasification zone.

In an embodiment, the flow member comprises an inclined guiding surface configured to deflect liquid flowing over the flow member in a direction away from the flow in the manifold, in particular in an upward direction, more in particular in a vertical upward direction.

In an embodiment, the flow member comprises a first inclined guiding surface and a second inclined guiding surface in order to branch off a branch flow from the flow in the manifold regardless of the direction of the flow through the manifold, wherein the first inclined guiding surface deflects liquid flowing from the first fluid connection and the second inclined surface deflects liquid flowing from the second fluid connection.

Because the first inclined guiding surface deflects liquid flowing from the first fluid connection and the second inclined surface deflects liquid flowing from the second fluid connection, the degassing device may be used with fluid flowing from the first fluid connection to the second fluid connection or vice versa.

In an embodiment, the flow member comprises a first inclined guiding surface and a second inclined guiding surface which curve in a direction away from the manifold, in particular in an upward direction.

In an embodiment, the first inclined guiding surface is configured to branch off a branch flow when the flow flows in a first direction through the manifold and the second inclined guiding surface is configured to branch off a branch flow when the flow flows in a second direction through the manifold, wherein the first direction is opposite to the second direction.

Advantageously, the branch flow is branched off when the flow flows through the manifold in a first direction or in an opposite second direction. As a result, the degassing device is bi-directional and may be used with fluid flowing from the first fluid connection to the second fluid connection or vice versa. The branch flow is always branched off, regardless of the direction of the fluid flow in the main channel. This makes installation easier.

In an embodiment, the first guiding surface and the second guiding surface come together at a merge point.

In an embodiment, the manifold comprises the main flow channel and a bypass channel, wherein the main flow channel and the bypass channel bifurcate and merge between the first fluid connection and the second fluid connection. The branch flow passage branches off from the bypass channel and the return flow passage returns in the main flow channel. Advantageously, this reduces the chances of fluid that has been recently degassed to be ingested by the degassing device directly thereafter.

In an embodiment, the flow member is arranged in the bypass channel.

Because the flow member is arranged in the bypass channel, the main flow which flows through the main flow channel is not disturbed by the flow member. This reduces the flow resistance of the degassing device when not operational.

In an embodiment, in the closed position of the first valve the first valve obstructs the branch flow passage and closes off the degasification zone from the main flow channel, and the degassing device comprises a second valve which is moveable between a closed position and an open position, wherein in the closed position the second valve obstructs the return flow passage and closes off the degasification zone from the main flow channel and wherein in the open position the second valve does not obstruct the return flow passage.

By using two separate valves to be able to close off the branch flow passage and the return flow passage, the two valves may be placed at a distance from each other along the main flow. In doing so, the renewal of liquid in the degasification housing may advantageously be increased.

In an embodiment, the second valve is a non-return valve or wherein the second valve is an actuated valve controlled by a control unit.

In an embodiment, the cylinder extends through a space between the main flow channel and the bypass channel.

Because the cylinder extends through a space between the main flow channel and the bypass channel, a compact construction is enabled.

In an embodiment, the branch flow passage enters the cylinder at a cylinder entry location which is situated above or below the main flow channel, wherein the main flow channel is arranged horizontally.

In an embodiment, the piston actuator is fixed to the degasification housing via one or more resilient members and the piston actuator is resiliently moveable between a first actuator position and a second actuator position.

The piston actuator may be fixed to the degasification housing via the one or more resilient member in order to be able to absorb mechanical vibrations.

In an embodiment, the degasification housing comprises a first abutment and a second abutment. Herein, the piston is extended against the first abutment to move the piston actuator into the first actuator position, and the piston is retracted against the second abutment to move the piston into the second actuator position.

In an embodiment, the degassing device comprises a direction switch that is configured to operate the piston actuator in a first direction in a first switch position and to operate the piston actuator in a second direction in a second switch position. Herein, the movement from the first actuator position to the second actuator position moves the direction switch from the first switch position to the second switch position and vice versa.

In doing so, a system is obtained that is able to continuously operate without the need of complex control systems. When the piston has reached an abutment, the piston actuator direction automatically changes, moving the piston to another abutment, and so on.

In an embodiment, the direction switch comprises a delay component, wherein the delay component is configured to delay the operation of the piston actuator after the switch position is changed.

In doing so, an idle time period is created wherein the piston does not move and wherein liquid can flow into the degasification zone or wherein the liquid in the degasification zone is at rest. This may increase the performance of the system.

In an embodiment, the piston is at least partially moveable within the cylinder.

In an embodiment, the piston is moveable in a direction that is substantially parallel to the main flow channel, wherein preferably the main flow channel is oriented substantially horizontally, and the direction is oriented substantially horizontally or wherein preferably the main flow channel is oriented substantially vertically and the direction is oriented substantially vertically. By positioning the pressure reduction device in an orientation that allows the piston to move in a direction substantially parallel to the main flow channel, an efficient use of space can be achieved. Because the direction is substantially parallel to the main flow channel, the space occupied by the degassing device in a direction away from the main flow channel can be reduced.

In an embodiment, the piston is moveable in a direction that is substantially orthogonal to the main flow channel, wherein preferably the main flow channel is oriented substantially horizontally, and the direction is oriented substantially vertically. By positioning the pressure reduction device in an orientation that allows the piston to move in a direction substantially orthogonal to the main flow channel, another efficient use of space can be achieved. Because the direction is substantially orthogonal to the main flow channel, the space occupied by the degassing device in a direction along the main flow channel can be reduced.

In an embodiment, the piston is in direct contact with the liquid and preferably no membrane is present between the piston and the degasification zone. Because no membrane is present, the device becomes more robust and may require less maintenance. The absence of a membrane means that there is one less part that can malfunction and that there is no membrane that may clog, inhibiting the working of the device. Because the piston may directly act on the liquid without first having to deform an elastic member such as a membrane, a pressure reduction can be achieved faster.

In an embodiment, the piston comprises at least one seal, in particular two seals located at a distance from each other, in particular the seals being O-rings, more in particular the seals being double lip seals. Such seals may be used to increase the performance of the pressure reduction device by increasing sealing capabilities and therefore loss of pressure difference.

In an embodiment, the pressure reduction device is located in a lower part of the degasification housing and the pressure reduction device is configured to be operated below a liquid level in the degasification housing.

By being able to place the pressure reduction device in a lower part of the degasification housing and the pressure reduction device being configured to be operated below the liquid level, the pressure reduction device can be positioned close to the main flow channel. This may reduce the amount of space taken up by the degassing device.

In an embodiment, the branch flow passage extends through the cylinder between the main flow channel and the degasification zone and the piston movement is configured to move the first valve to the closed state. In doing so, in a single operation of the piston can be used to close off the branch flow passage and reduce the pressure inside the degasification zone. Thereby, no additional actuator is needed to move the first valve to the closed state.

In an embodiment, a cavity is located in the cylinder and between the main flow channel and the piston, wherein a branch flow path extends through the cavity, in particular behind the piston and around a piston drive shaft.

In an embodiment, the cylinder defines a branch flow hole, wherein the branch flow path extends through the branch flow passage, through the cavity and through the branch flow hole into the inner volume.

In an embodiment, the branch flow passage is defined by the cylinder, the branch flow hole and the piston.

In an embodiment, the second valve is a non-return valve. In such an embodiment, when the pressure is reduced by the pressure reduction device, the relatively higher pressure in the main flow channel forces the second non-return valve to the closed state. In doing so, no actuator may be necessary to close off the valve.

In an embodiment, the overflow valve comprises a backflow preventer configured to allow gas to escape but not to enter the gas outlet, in particular the backflow preventer being a non-return valve. When the pressure reduction device is operated, the backflow preventer prevents more particles to be sucked into the degasification zone. In doing so, a volume increase more effectively and efficiently lowers the pressure because no particles can be added to the volume.

In an embodiment, the degassing device further comprises a vacuum pump connected to the gas outlet and a porous chamber located within the inner volume of the degasification housing, wherein the branch flow passage branches off part of the main flow into the porous chamber and the return flow passage extends between the porous chamber and the main flow channel. The porous chamber may comprise a porous element that is permeable to gases and impermeable to the liquid.

By using the combination of the vacuum pump and the porous chamber, the gas outlet does not need to be closed off by a floater, because the vacuum pump functions as a non-return valve for the separated gases. Also, because the porous element is impermeable to the liquid, there is little risk of the liquid reaching the vacuum pump, which would be detrimental to its operation.

In an embodiment, the degassing device further comprises a biased switch configured to interrupt an operation of the pressure reduction device, wherein in the first actuator position, the piston actuator engages the biased switch and in the second actuator position, the switch is disengaged.

When the piston actuator is operated to move the piston to the low pressure position, a maximum underpressure risks to be exceeded. When this is about to happen, the low pressure pulls the piston, and therewith the piston actuator, away from the switch towards the second actuator position, disengaging the switch. The disengagement of the switch may deactivate the operation of the piston actuator, inhibiting a further reduction of pressure.

In an embodiment, the degassing device further comprises at least one sensor and the control unit is configured to read out the at least one sensor and/or to control the pressure reduction device. In doing so, the pressure inside the degasification housing can be monitored and controlled if necessary.

In an embodiment, a first pressure sensor is located in the manifold or in the main flow channel and a second pressure sensor is located in the degasification zone. The control unit may then be configured to operate the pressure reduction device as a function of an output of the first pressure sensor and/or the second pressure sensor. By measuring the pressure both in the manifold or main flow channel and in the degasification zone, the pressure difference between the two can be determined.

In an embodiment, at least one sensor is a current measurement device configured to determine the current necessary to move the piston. By determining the current needed to move the piston, the pressure inside the degasification housing may also be determined as a function of the force necessary to move the piston.

In an embodiment, the pressure reduction device comprises the sensor configured to measure a pressure in the degasification zone.

In an embodiment, at least one sensor is a strain gauge or a stress gauge, wherein the at least one sensor is used to measure a strain value or a stress value for the control unit to determine a pressure in the degasification zone. By connecting the strain gauge or stress gauge to the piston or piston actuator, the force acting on the piston or piston actuator can be determined and can be used to determine the pressure in the degasification housing. The control unit can thereby determine a pressure in the degasification zone.

In an embodiment, the degassing device further comprises a temperature sensor. The temperature sensor may be located in the manifold or in the main flow channel. The temperature sensor measures a temperature of the liquid in the manifold or the main flow channel and the control unit reads out the temperature sensor and controls the pressure reduction device.

In an embodiment, the control unit is further configured to operate at least one of the first valve, the second valve, and the main flow valve.

In an embodiment, the degassing device further comprises a flow switch, wherein when no flow is present in the manifold or the main flow channel, the flow switch prevents the pressure reduction device from operating.

In an embodiment, the pressure reduction device is at least partially positioned on an upstream side of the degasification housing, in particular the piston actuator being located on the upstream side of the degasification housing.

In an embodiment, the degassing device comprises at least one pressure sensor and the control unit comprises:
- a first test module configured for determining the presence of a leak, the first test module being configured to:
   ∘ close the at least one valve,
   ∘ subsequently operate the pressure reduction device to reduce or increase the pressure, and
   ∘ subsequently read out the at least one pressure sensor,
   ∘ after a period of time read out the at least one pressure sensor a second time and
   ∘ compare the second measured pressure with the first measured pressure to determine a difference, wherein a difference signal is generated,
   and/or
- a second test module configured for determining the presence of flow in the main flow channel, the second test module being configured to:
   ∘ read out the at least one pressure sensor,
   ∘ subsequently close the at least one valve,
   ∘ after a period of time read out the at least one pressure sensor a second time, and
   ∘ compare the second measured pressure with the first measured pressure to determine a difference, wherein when the difference is smaller than a threshold value, a difference signal is generated indicative of a lack of flow.

By using such a first and/or second test module, the degassing device can be tested in order to keep it operating well and to be able to perform maintenance in time.

In an embodiment, the first test module is configured to maintain the pressure in the degasification zone constant or substantially constant over a test time period by measuring the pressure in the degasification zone, comparing the measured pressure to a target pressure and operating the pressure reduction device to maintain the pressure in the degasification zone at the target pressure. Herein, the first test module measures an operating parameter of the pressure reduction device in time and it is configured to generate a difference signal indicative of a leak when the measured operating parameter exceeds a predetermined threshold value. The operating parameter is in particular the position of a piston and/or a power consumption of the pressure reduction device.

Alternatively or additionally, the first test module is configured to maintain a position of the piston constant or substantially constant over a test time period. Herein, said first test module measures the pressure in the degasification zone over a test time period and is configured to generate a difference signal indicative of a leak when a measured pressure difference over time exceeds a predetermined threshold value.

In an embodiment, the first and/or second test module determines the difference and:
- when the difference is larger than the threshold value, the control unit periodically carries out a degassing cycle, and
- when the difference is smaller than the threshold value, the control unit does not carry out any degassing cycle.

By being able to determine whether or not a flow is present in the main flow channel, the degassing device can be operated only when it is useful to do so. This reduces potential wear and reduces the amount of energy consumed.

In an embodiment, the manifold or the main flow channel is defined by a cup comprising an inlet and an outlet and a lid from which a plate protrudes downwards. The plate divides the cup in an inlet side and an outlet side and allows fluid communication from the inlet side to the outlet side only through the constriction. The lid also separates the main flow channel from the degasification zone and comprises at least one valve located in at least one flow passage. The degasification housing comprises a hood that is placed on top of the lid.

In an embodiment, the degasification zone is connected to the pressure reduction device via a pipe, and/or the degasification zone and/or the pressure reduction device are connected to the main flow channel via a pipe. In doing so, various geometric configurations can be obtained to fit the degassing device in various spaces.

Another aspect of the invention relates to a method for degassing a gas-containing liquid in a cooling or heating installation by using a degassing device, the degassing device comprising:
- a manifold extending between a first fluid connection and a second fluid connection, wherein in operation a flow of liquid flows through the manifold from the first fluid connection to the second fluid connection or vice versa,
- at least one flow passage extending from the manifold to a degasification zone, the flow passage being configured to allow fluid communication between the manifold and the degasification zone,
- a degasification housing defining an inner volume, wherein the inner volume substantially corresponds to the degasification zone,
- a pressure reduction device connected to the degasification housing, wherein during operation, the pressure reduction device is configured to lower the pressure in the degasification zone relative to the pressure of the flow in the manifold. wherein:
   ∘ the pressure reduction device comprises a piston, a cylinder, and a piston actuator and wherein the piston is moveable between an extended idle pressure position and a retracted low pressure position and wherein a frontal cylinder volume in front of the cylinder is in fluid communication with the inner volume and the degasification zone comprises the frontal cylinder volume,
   ∘ in the low pressure position of the piston the degasification zone extends into the cylinder and is larger than in the idle pressure position of the piston,
   ∘ the degasification zone is delimited by the degasification housing, and by at least part of an outer surface of the piston and/or by at least a part of the inner surface of the cylinder.
- at least one valve which is moveable between a closed position and an open position, wherein in the closed position the valve obstructs the flow passage, and closes off the degasification zone from the flow in the manifold, wherein in the open position the at least one valve does not obstruct the flow passage,
- a gas outlet in the degasification housing, the gas outlet comprising:
   ∘ an outlet tube and an outlet closing body, wherein the outlet tube is closable by the outlet closing body,
   ∘ an overflow valve defining a gas outlet opening, wherein the overflow valve is configured to close the gas outlet opening when a liquid level in the degassing device is higher than an overflow threshold level, and wherein the overflow threshold level is higher than the outlet closing body,
wherein the degassing device is configured to carry out a degassing cycle, the degassing cycle comprising:
- a pressure reduction step, during which the gas outlet and the at least one valve are closed, wherein the pressure reduction device is configured to degas the gas-containing liquid by reducing the pressure, wherein at a start of the pressure reduction step, the liquid level in the degassing device is at the overflow threshold level and the outlet closing body closes off the outlet tube before the liquid level falls below the outlet tube,
   ∘ a gas expulsion step, during which the pressure in the degasification zone is increased and separated gas is passed through the outlet tube and the gas outlet opening,,
wherein the method comprises the steps:
a) passing a main flow of liquid into the manifold via the first fluid connection or the second fluid connection, preferably passing the main flow through the manifold from the first fluid connection to the second fluid connection or vice versa,
b) branching off a portion of the main flow through the at least one flow passage,
c) moving the at least one valve to the respective closed position, thereby obstructing the at least one flow passage and closing off the degasification zone from the manifold,
d) closing the gas outlet,
e) operating the pressure reduction device to lower the pressure in the degasification zone relative to the pressure in the manifold by moving the piston from the extended idle pressure position to the retracted low pressure position, wherein the degasification zone is delimited by the degasification housing and the piston,
f) opening the at least one valve and the gas outlet,
   wherein the degassing cycle comprises a pressure reduction step comprising steps c), d), and e), and comprises a gas expulsion step comprising step f), wherein,

- during the pressure reduction step, the gas outlet and the at least one valve are closed, wherein the pressure reduction device is configured to degas the gas-containing liquid by reducing the pressure, wherein at a start of the pressure reduction step, a liquid level in the degassing device is at the overflow threshold level and the outlet closing body closes off the outlet before the liquid level falls below the outlet tube,
- during the gas expulsion step, the pressure in the degasification zone is increased and separated gas is passed through the outlet tube and the gas outlet opening.

The method has the same advantages as the device according to the invention. In step f), the outlet closing body no longer closes the outlet tube. The separated gas travels through the outlet tube and is expelled.

In the retracted position of the piston the degasification zone extends into the cylinder and is larger than in the extended position of the piston. Herein, the degasification zone is delimited by the degasification housing, and at least part of an outer surface of the piston and/or by at least a part of the inner surface of the cylinder.

By moving the piston from the extended position to the retracted position, the degasification zone is pulled into the cylinder and becomes larger than in the idle pressure position of the housing. Because the volume of the degasification zone increases while the content of the degasification zone, i.e., the amount of liquid inside the degasification zone, remains substantially the same, the pressure to which the liquid in the degasification zone is subjected is reduced. The reduced pressure causes the liquid to degas. The degassing cycle may be carried out at set time intervals or points in time. Alternatively or additionally, the degassing cycle may be carried out dependent on input such as user input or measurement data.

In an embodiment, the overflow valve opens the gas outlet opening when the liquid level in the degassing device is lower than the overflow threshold level. This way, gas can escape from the degassing device.

In an embodiment, at least part of the outlet closing body is formed by a lower part of a floater and wherein when a liquid level is lower than a predetermined level, the outlet closing body closes off a gas outlet tube.

In an embodiment, the outlet closing body comprises a protrusion extending from the floater, and an outer dimension of the protrusion substantially matches an inner dimension of the outlet tube and wherein during step e) the protrusion is forced into the outlet tube.

In an embodiment, the floater comprises a second protrusion extending from the floater, and an outer dimension of the second protrusion substantially matches an inner dimension of the gas outlet opening and wherein when the liquid level is at the second predetermined level, the protrusion is forced into the gas outlet opening.

In an embodiment:
- the outlet closing body comprises a outlet closing non-return valve, and the outlet closing non-return valve is preferably actuated by an actuator,
- the piston comprises an actuator end,
- the outlet closing non-return valve is preferably actuated by the actuator end of the piston, wherein when the piston is moved to the idle pressure position, the actuator end moves the outlet closing non-return valve to the open position, and wherein when the piston is moved to the retracted position, the outlet closing non-return valve is allowed to move to the closed position.

In an embodiment, the outlet closing body closes off the outlet tube at a closing location and the predetermined liquid level is located above the closing location. This reduces the compressibility of the mediums in the degasification zone and improves the degasification of the liquid.

In an embodiment, the degassing device comprises two flow passages, a first flow passage being a branch flow passage, and a second flow passage being a return flow passage.

In an embodiment, the degasification zone is enlarged into the cylinder when the piston is moved from the extended position to the retracted position and the degasification zone is larger in the retracted position than in the extended position. The piston actuator will pull on the piston to move the piston to the low pressure position.

In an embodiment, the branch flow passage extends through the cylinder between the main flow channel and the degasification zone and wherein step d) and step e) occur substantially simultaneous and wherein the moving of the piston moves at least one of the first valve, the second valve to the closed position, and/or closes the gas outlet.

In an embodiment, the gas outlet further comprises a gas outlet opening and wherein when a liquid level is at a second predetermined level, the outlet closing body is moved to an upper position, closing off the gas outlet opening.

In an embodiment, the gas outlet further comprises an overflow valve and when a liquid level is at the second predetermined level, the overflow valve closes off the gas outlet opening.

In an embodiment, the overflow valve comprises a backflow preventer. The backflow preventer preventing gas to flow into the degasification zone when an outside pressure is larger than a pressure inside the degasification housing. In particular, the backflow preventer prevents gas to flow into the degasification zone during step e).

In an embodiment, the main flow channel is constricted between the first fluid connection and the second fluid connection and the constriction increases pressure near the branch flow passage and forces at least a portion of the main flow into the degasification housing. The main flow channel may also comprise a branch flow separator that branches off at least a portion of the main flow into the degasification zone. The main flow channel may also comprise a main flow valve configured to branch off a portion of the main flow into the degasification zone. In doing so, the renewal of liquid in the degasification zone may be increased.

In an embodiment, the constriction comprises a non-return valve.

In an embodiment, prior to step f), the pressure in the degasification zone is increased to substantially the pressure present during step b). This reduces pressure differences between the main flow channel and the degasification housing, and/or pressure differences between the outside and the degasification housing. This facilitates the operation of the gas outlet and the valve configured to close off the branch flow passage and the valve configured to close off the return flow passage.

In an embodiment, the degassing device further comprises a biased switch and the piston actuator is fixed to the degasification housing via one or more resilient members and the piston actuator is resiliently moveable between a first actuator position and a second actuator position. When a force necessary to move the piston to the retracted position exceeds a predetermined value corresponding to a minimum pressure inside the degasification housing, the force moves the actuator from the first actuator position engaging the biased switch to the second actuator position disengaging the switch, wherein the disengagement of the switch interrupts the operation of the pressure difference device. In doing so, for example, a predetermined minimum pressure or maximum underpressure can be ensured to remain above the vapour line of the liquid, preventing the liquid from boiling.

In an embodiment, the degasification housing further comprises a first abutment and a second abutment and the piston actuator is fixed to the degasification housing via one or more resilient members and the piston actuator is resiliently moveable between a first actuator position and a second actuator position. Herein, when the piston extends against the first abutment the piston actuator moves into the first actuator position, and when the piston retracts against the second abutment the piston moves into the second actuator position.

In an embodiment, the degassing device comprises a direction switch that operates the piston actuator in a first direction in a first switch position and operates the piston actuator in a second direction in a second switch position. Herein, the movement from the first actuator position to the second actuator position moves the direction switch from the first switch position to the second switch position and vice versa.

In doing so, a system is obtained that is able to continuously operate without the need of complex control systems. When the piston has reached an abutment, the piston actuator direction automatically changes, moving the piston to another abutment, and so on.

In an embodiment, the direction switch comprises a delay component. Herein, the delay component delays the operation of the piston actuator when the switch position is changed.

In doing so, an idle time period is created wherein the piston does not move and wherein liquid can flow into the degasification zone or wherein the liquid in the degasification zone is at rest. This may increase the performance of the system.

In an embodiment, the degassing device further comprises at least one sensor and the control unit reads out the at least one sensor and/or controls the pressure reduction device. In doing so, the pressure inside the degasification housing can be monitored and controlled if necessary.

In an embodiment, the sensor is a force sensor connected to the piston actuator and the degasification housing, wherein the sensor measures a force acting on the piston actuator in a direction substantially parallel to a central axis of the cylinder. By connecting the force sensor to the piston actuator, the force acting on the piston actuator can be determined and can be used to determine the pressure in the degasification housing.

In an embodiment, a first pressure sensor is located in the manifold or the main flow channel and wherein a second pressure sensor is located in the degasification zone. Herein, the first and second pressure sensor measure respectively a first and a second pressure.

In an embodiment, the degassing device further comprises a temperature sensor. The temperature sensor may be located in the manifold or in the main flow channel. The temperature sensor measures a temperature of the liquid in the manifold or the main flow channel and the control unit reads out the temperature sensor and controls the pressure reduction device.

In an embodiment, the control unit further operates at least one of the first valve, the second valve, the main flow valve, and the gas outlet valve.

In an embodiment, the device further comprises a flow switch, wherein when no flow is present in the manifold or in the main flow channel, the flow switch prevents the pressure reduction device from operating. This prevents the device from operating when the liquid in the degasification zone is not refreshed between cycles.

In an embodiment, the first valve is integrated in the piston, wherein the piston comprises a part which obstructs the flow passage in the low pressure position, wherein the movement of the piston from the idle pressure position towards the low pressure position moves the first valve from the open position to an idle closed position, wherein the step of moving the at least one valve to the respective closed position comprises moving the piston from the idle pressure position towards the low pressure position.

In a further aspect, the invention relates to a method for testing a degassing device for degassing a gas-containing liquid in a cooling or heating installation, the degassing device comprising:
- a manifold extending between a first fluid connection and a second fluid connection, wherein in operation a flow of liquid flows through the manifold from the first fluid connection to the second fluid connection or vice versa,
- at least one flow passage extending from the manifold to a degasification zone, the flow passage being configured to allow fluid communication between the manifold and the degasification zone,
- a degasification housing defining an inner volume, wherein the inner volume substantially corresponds to the degasification zone,
- a pressure reduction device connected to the degasification housing, wherein during operation, the pressure reduction device is configured to lower the pressure in the degasification zone relative to the pressure of the flow in the manifold, wherein:
   ∘ the pressure reduction device comprises a piston, a cylinder, and a piston actuator and wherein the piston is moveable between an extended idle pressure position and a retracted low pressure position and wherein a frontal cylinder volume in front of the cylinder is in fluid communication with the inner volume and the degasification zone comprises the frontal cylinder volume,
   ∘ in the low pressure position of the piston the degasification zone extends into the cylinder and is larger than in the idle pressure position of the piston,
   ∘ the degasification zone is delimited by the degasification housing, and by at least part of an outer surface of the piston and/or by at least a part of the inner surface of the cylinder,
- at least one valve which is moveable between a closed position and an open position, wherein in the closed position the at least one valve obstructs the flow passage, and closes off the degasification zone from the flow in the manifold and wherein in the open position the at least one valve does not obstruct the flow passage,
- a gas outlet in the degasification housing, the gas outlet comprising:
   ∘ an outlet tube and an outlet closing body, wherein the outlet tube is closable by the outlet closing body,
   ∘ an overflow valve defining a gas outlet opening, wherein the overflow valve is configured to close the gas outlet opening when a liquid level in the degassing device is higher than an overflow threshold level, and wherein the overflow threshold level is higher than the outlet closing body,
- a control unit to control at least the movement of the piston in order to carry out a degassing cycle,
wherein the control unit is configured to carry out a degassing cycle, by carrying out:
- a pressure reduction step, during which the gas outlet and the at least one valve are closed, wherein the pressure reduction device is configured to degas the gas-containing liquid by reducing the pressure, wherein at a start of the pressure reduction step, the liquid level in the degassing device is at the overflow threshold level and the outlet closing body closes off the outlet tube before the liquid level falls below the outlet tube,

- a gas expulsion step, during which the pressure in the degasification zone is increased and separated gas is passed through the outlet tube and the gas outlet opening,
   the control unit comprising a first and/or a second test module, connected to the pressure sensor and configured to receive a pressure difference signal from the pressure sensor,
   wherein the method comprises the steps:
      a) closing the at least one valve and measuring a first pressure in the degasification housing with the pressure sensor,
      b) measuring a second pressure in the degasification housing with the pressure sensor after a period of time,
      c) comparing the second pressure with the first pressure by the control unit to determine a difference,
   wherein a difference signal is generated by the control unit when a difference between the first pressure and the second pressure is present.

By using such a first and/or second test module, the degassing device can be tested in order to keep it operating well and to be able to perform maintenance in time.

In an embodiment, step a) comprises the sequential steps of:
a1) closing the at least one valve,
a2) operating the pressure reduction device to reduce or increase the pressure inside the degasification housing,
a3) measuring the first pressure.

Herein, the difference signal which is generated by the control unit when the difference between the first pressure and the second pressure is indicative of a leak in the degasification housing which allows liquid and/or gas to escape out of the degasification housing.

A very small difference signal would indicate a very small, perhaps insignificant leak and a larger difference signal would indicate a larger, more significant leak. If such test procedure is performed during maintenance, an operator can judge the difference signal to determine whether or not action should be taken. This may also be done autonomously by the control unit.

In an embodiment, in step a2) the pressure is reduced to below atmospheric pressure and if the second pressure is higher than the first pressure and lower than or equal to the atmospheric, a difference signal is generated which is indicative of a leakage of air from outside into the degasification housing.

In an embodiment, in step a2) the pressure is reduced to above atmospheric pressure but below a pressure in the manifold or main flow channel and if the second pressure is lower than the first pressure, a difference signal is generated which is indicative of a leakage from inside the degasification housing to the outside.

In an embodiment, in step a2) the pressure is reduced to above atmospheric pressure but below the pressure in the manifold or main flow channel and if the second pressure is higher than the first pressure, a difference signal is generated which is indicative of a leakage from the manifold or main flow channel into the degasification housing.

In an embodiment, the control unit controls the pressure reduction device to keep the second pressure substantially equal to the first pressure, and if the pressure reduction device is operated after measuring the first measured pressure, a difference signal is generated which is indicative of a leakage.

By maintaining the pressure in the degasification zone constant or substantially constant over a test time period by measuring the pressure in the degasification zone, comparing the measured pressure to a target pressure and operating the pressure reduction device to maintain the pressure in the degasification zone at the target pressure. Leakage can also be tested. The test module measures an operating parameter of the pressure reduction device in time and is configured to generate a difference signal indicative of a leak when the measured operating parameter exceeds a predetermined threshold value, wherein said operating parameter is in particular the movement of a cylinder and/or a power consumption of the pressure reduction device.

Alternatively or additionally, the first test module is configured to maintain a position of the piston constant or substantially constant over a test time period. Herein, said first test module measures the pressure in the degasification zone over a test time period and is configured to generate a difference signal indicative of a leak when a measured pressure difference over time exceeds a predetermined threshold value.

In an embodiment, in step a2) the pressure is reduced to below atmospheric and if the pressure reduction device is operated to reduce the pressure, a difference signal is generated which is indicative of a leakage of air from outside into the degasification housing or from the manifold or main flow channel into the degasification zone.

In an embodiment, in step a2) the pressure is reduced to above atmospheric but below a pressure in the manifold or main flow channel and if the pressure reduction device is operated to increase the pressure, a difference signal is generated which is indicative of a leakage from inside the degasification housing to the outside.

In an embodiment, in step a2) the pressure is reduced to above atmospheric but below the pressure in the manifold or main flow channel and if the pressure reduction device is operated to reduce the pressure, a difference signal is generated which is indicative of a leakage from the manifold or main flow channel into the degasification housing.

In an embodiment, the degassing device comprises at least two flow passages, one flow passage being a branch flow passage and one flow passage being a return flow passage and the at least one valve is located in at least one of the at least two flow passages. Herein, during step a), the at least one valve is closed after measuring the first pressure and, when the difference is smaller than a predetermined threshold value, a difference signal is generated indicative of a lack of flow.

By determining whether or not a flow is present in the manifold or main flow channel, the control unit is able to determine whether or not degassing the liquid is necessary and/or useful.

In an embodiment, when the difference is larger than the predetermined threshold value, the control unit periodically carries out a degassing cycle, and when the difference is smaller than the predetermined threshold value, the control unit does not carry out any degassing cycle.

In an embodiment, the device further comprises a second valve located in the other of the at least two flow passages and after the method of claim 71 has been performed, any of the methods of claim 63 - 70 is performed.

In an embodiment, the method is performed prior to or during performing a method according to any of claims 53 - 70.

In an embodiment, the method is performed periodically.

### BRIEF DESCRIPTION OF THE DRAWINGS

Figure 1 depicts an embodiment of the degassing device in an idle state.
Figure 2 depicts an embodiment of the degassing device in a state wherein the pressure reduction device has just started operation.
Figure 3 depicts an embodiment of the degassing device in a low pressure state.
Figure 4 depicts an embodiment of the degassing device after dissolved gas has been separated from the liquid and is being evacuated to outside of the degassing device.
Figure 5 depicts an embodiment comprising a floater chamber, sensors and a control unit in an idle state.
Figure 6 depicts an embodiment comprising a floater chamber, sensors and a control unit in a low pressure state.
Figure 7 depicts an embodiment comprising a floater chamber, sensors and a control unit in an overpressure state.
Figure 8 depicts an embodiment of the degassing device, wherein valves are controlled by the control unit in an idle state.
Figure 9A depicts an embodiment of the degassing device, wherein valves are controlled by the control unit in a low pressure state.
Figure 9B depicts a different embodiment of the degassing device than figure 9A, in the same state as the embodiment depicted in figure 9A.
Figure 10 depicts an embodiment of the degassing device, wherein valves are controlled by the control unit in an idle state.
Figure 11 depicts an embodiment of the degassing device, wherein valves are controlled by the control unit in a low pressure state.
Figure 12 depicts an embodiment wherein the piston movement is oriented orthogonally to the main flow channel is an idle state.
Figure 13 depicts an embodiment wherein the piston movement is oriented orthogonally to the main flow channel is a low pressure state.
Figures 14A and 14B depict an embodiment of the piston actuator
Figure 15 depicts an embodiment of the degassing device not according to the invention, comprising a porous chamber and a vacuum pump.
Figure 16 depicts an embodiment with one flow passage, wherein the degassing device is in an idle pressure position.
Figure 17 depicts an embodiment with one flow passage, wherein the degassing device is in a low pressure position.
Figure 18 depicts an embodiment comprising a test module and open valves.
Figure 19 depicts an embodiment comprising a test module and with one closed valve.
Figure 20 depicts an embodiment comprising a test module and with two closed valves.
Figure 21 depicts an embodiment where no flow is present.
Figures 22A, 22B, 22C, and 22D depict pressure as a function of pressure reduction device operation and time.
Figures 23A and 23B depict pressure as a function of pressure reduction device operation and time respectively.
Figures 24A and 24B depict pressure as a function of pressure reduction device operation and time respectively.
Figures 25A and 25B depict an embodiment of the degassing device comprising a cup and a hood.
Figures 26A and 26B depict an embodiment of the degassing device comprising a cup and a hood.
Figures 27A and 27B depict an embodiment comprising a direction switch and pipes.
Figures 28A and 28B depict a close up of a pressure reduction device in two positions.
Figures 29A and 29B depict embodiments comprising a flow switch located in different positions.
Figures 30A and 30B depict an embodiment comprising an actuator end.
Figures 31A, 31B, 31C, 31D and 31E depict an embodiment of the degassing device which is bi-directional and can work with a main flow in two mutually opposite directions.

### DETAILED DESCRIPTION OF THE DRAWINGS

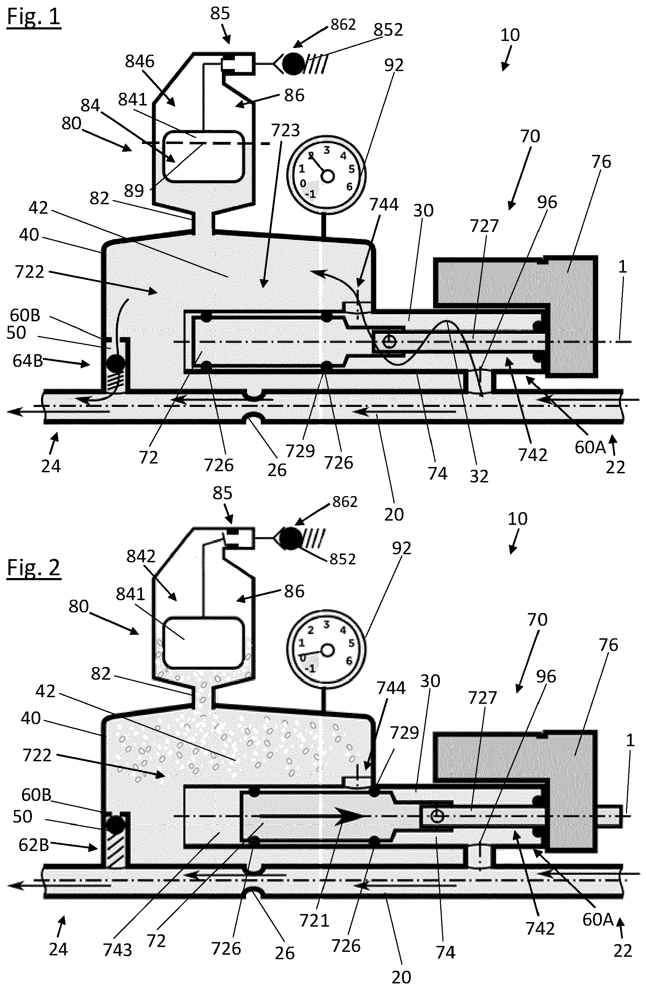

Turning to figures 1-4, a cross section of an embodiment of a degassing device 10 is depicted. The figures depict the degassing cycle wherein an amount of liquid is separated from the main flow channel, the liquid is degassed via a pressure reduction, the gas is expelled, and the liquid is communicated with the main flow channel. After this cycle is completed, a new cycle starts. The degassing device 10 is connected to a liquid circuit of a cooling or heating installation (not depicted) wherein a liquid of the cooling or heating installation enters the degassing device 10 via a first fluid connection 22 and exits the degassing device via a second fluid connection 24. In operation, a main portion of the liquid flow passes through a main flow channel 20 and a branch flow is branched off by a branch flow passage 30. After being branched off, the flow passes through the branch flow passage into a degasification zone 42 where the liquid will be degassed. The degasification zone 42 substantially corresponds to an inner volume of a degasification housing 40. In an idle state of the degassing device, the liquid first passes through the branch flow passage 30 and the degasification zone 42, after which the liquid joins the main flow via a return flow passage 50 extending between the degasification zone and the main flow channel. The main flow channel, branch flow passage and return flow passage (if present) are together also referred to as a manifold 405. In the manifold, the flow is divided in a main flow and a branch flow. The branch flow goes into the degasification zone 42, while the main flow does not.

A pressure reduction device 70 is connected to the degasification housing 40 and is configured to lower the pressure in the degasification zone 42 relative to the pressure in the main flow channel. The pressure can be measured with a sensor 92, in particular with a manometer.

In order to be able to degas the liquid in the degasification zone, the degasification housing must be closed off from the outside, i.e., from the atmosphere outside the degassing device and from the main flow channel. To do so, a valve 60B is present that is moveable between a closed position 62B and an open position 64B. In the closed position the valve obstructs the return flow passage 50 and closes off the degasification zone from the main flow channel. Another valve 60A is present and is configured to be moved between a closed position 62B and an open position 64B and obstructs the branch flow passage in the closed position, closing off the degasification zone 42 from the main flow channel 20.

After the degassing of the liquid has taken place, the separate gas must be evacuated from the device. To this end, a gas outlet 80 is present in the degasification housing and comprises an outlet tube 82 and an outlet closing body 84.

In the depicted embodiment, the pressure reduction device 70 comprises a piston 72, a cylinder 74 and a piston actuator 76. The piston actuator 76 is configured to move the piston 72 between an extended, idle pressure position 722 and a retracted, low pressure position 724. Because the cylinder is in open communication with the degasification zone 42 and the degasification zone 42 extends into the cylinder and is larger in the retracted position 725 than in the extended position 723 of the piston, the movement of the piston from the extended position 722 to the retracted position 724 reduces the pressure inside the degasification zone 42; the closed off degasification zone grows in size whilst the amount of matter inside it remains substantially the same. The degasification zone 42 is delimited by the degasification housing 40, a part of the outer surface of the piston 72, and a part of the inner surface of the cylinder 74. It will be understood that if the piston actuator would be located on an opposite side of the piston 72 along the direction of movement of the piston, the low pressure position would correspond to an extended position and the idle pressure position would correspond to a retracted position because the piston actuator would push instead of pull. The piston actuator 76 may be one of an electric actuator, a pneumatic actuator, and a hydraulic actuator. The depicted piston movement is a linear movement.

In order to increase the volume of degasification zone, the piston 72 comprises two seals 726 in the form of O-rings that enable the piston to move within the cylinder and keep a substantially liquid-tight connection between the piston and the cylinder 74.

In figures 1-4, the pressure reduction device is located in a lower part of the degasification housing and is configured to be operate below a liquid level in the degasification housing. This, together with the substantially parallel direction 1 of the piston movement, enables the degassing device to be compact and to not occupy a lot of space far away from the main flow channel.

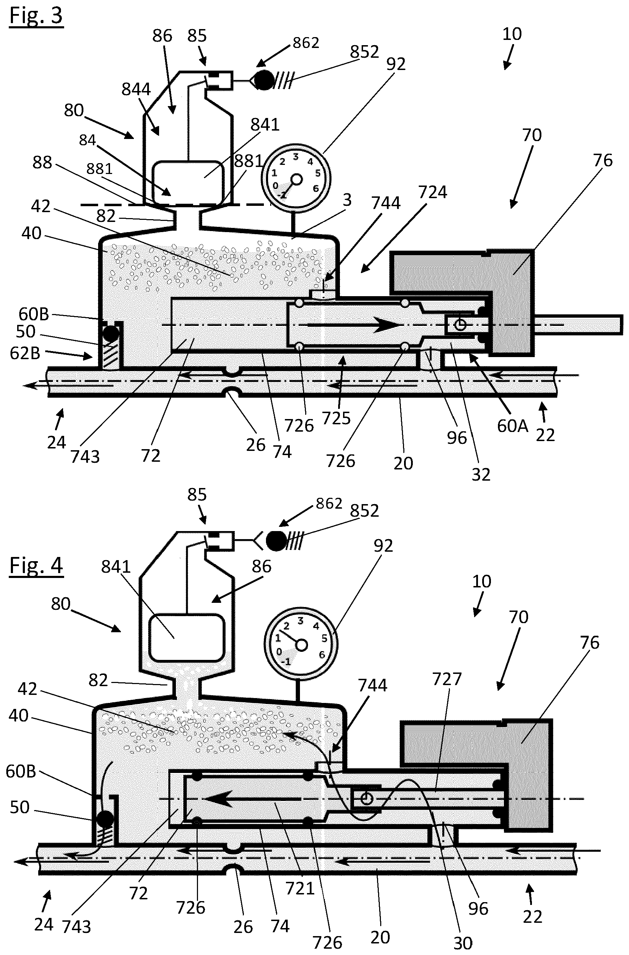

It can further be seen that the branch flow passage 30 extends through the cylinder 74 between the main flow channel 20 and the degasification zone 42. In figure 1, a branch flow path 32 is depicted extending from the main flow channel via a cylinder entry location 96 through a cavity 742 in the cylinder and entering the inner volume of the degasification housing 40 through a branch flow hole 744 defined by the cylinder. The branch flow path 32 extends around the piston drive shaft 727 and behind the piston 72. Further, the valve 60A is integrated in the pressure reduction device; the piston 72 is a part that is moveable into the low pressure position and there obstructs the branch flow passage because it comprises a part 729 which obstructs the branch flow passage when the piston 72 is in the low pressure position. In doing so, the piston movement is configured to move the valve 60A to the closed state when it moves from the idle pressure position to the low pressure position. The piston 72 is configured to obstruct the flow passage in at least one position between the idle pressure position 722 and the low pressure position 724. This is shown in figure 2, where the valve 60A is closed, obstructing the branch flow passage 30 while the piston 72 is between the idle pressure position 722 of figure 1 and the fully retracted low pressure position 724 of figure 3.

Looking at an upper region of the degassing device 10, the gas outlet 80 is depicted comprising a floater chamber 86 and the outlet closing body 84 formed by the lower part of a floater 841 that, in figure 1 floats on the liquid at an upper position 846 and in figure 2 floats on the liquid at a floating position 842. The floater is connected to an overflow valve 85 wherein, when the liquid level rises to a certain level (called the overflow threshold level 89), the floater closes off the overflow valve 85, as a result of which a further rise of the liquid level is prevented (depicted in figure 1). Alternatively, when the liquid level is lower, the floater does not close off the overflow valve, such that gas can escape the degassing device (as depicted in figure 2). The liquid level lowers when the pressure reduction device is activated and the outlet closing body 84 has not yet closed off the outlet tube. In that case, no gas escapes as the floater chamber is at ambient pressure. After degassing, the pressure inside the degassing volume rises and gas enters the floater chamber 86 from the degassing volume as the outlet closing body 84 no longer seals the outlet tube. This gas can escape the degassing device 10 via the overflow valve 85. Because gas is lighter than liquid, the gas will rise to the floater chamber 86 first. The overflow valve 85 will thus stay open until substantially all gas has left the degassing volume. Only then will liquid from the degassing volume enter the floater chamber 86. Liquid entering the floater chamber 86 from the degassing volume raises the floater 841 including the outlet closing body 84 to the overflow threshold level 89, thereby closing the overflow valve 85. Thus, after degassing is completed, substantially no gas is left in the degasification zone and the liquid level in the floater chamber is at or around the overflow threshold level 89.

When the pressure reduction device is operated, the liquid level is at the overflow threshold level 89 which may be about halfway the floater chamber. This is the maximum liquid level which is allowed by the floater. If the liquid level rises above this level, the floater closes the overflow valve 85. When the pressure reduction device starts to operate the liquid level drops due to the increase in volume of the degasification zone. The floater 841 then moves to a lower position 844 (depicted in figure 3) where it engages the outlet tube 82, this occurs when the liquid level is lower than a first predetermined liquid level 88. Here, the outlet closing body 84 formed by a lower part of the floater 841 closes off the outlet tube. A closing location 881 is then created at the points of engagement. The engagement disconnects an air pocket located in the gas outlet above the closing location from the degasification zone. Because the closing location 881 is under the liquid level, and closing is achieved before the liquid level falls below the outlet tube 82, little or no air is present in the degasification zone. Hence the overall compressibility of the liquid in the degasification zone is reduced, leading to better performance of the degassing process.

In order to seal off the gas outlet, a backflow preventer 852 is present. The backflow preventer prevents gas from the outside from flowing into the degasification housing when the outside pressure is greater than the pressure inside the degasification housing. In figure 4, when the pressure inside the housing is increased, the backflow preventer 852 is opened and the free gasses released from the liquid may be evacuated via the gas outlet. In addition, the backflow preventer 852 prevents gas from flowing into the degasification zone during a pressure reduction step of a degassing method.

In order to create a flow of liquid into the degasification zone 42, the main flow comprises a constriction 26 located between the first fluid connection 22 and the second fluid connection 24. By being constricted, the pressure in the main flow is increased near the branch flow passage, forcing a portion of the main flow into the degasification housing.

In operation, a method for degassing a gas-containing liquid in a cooling or heating installation by using a degassing device 10 comprises the steps:
a) passing a main flow of liquid into the manifold via the first fluid connection or the second fluid connection, preferably passing the main flow through the manifold from the first fluid connection to the second fluid connection or vice versa,
b) branching off a portion of the main flow through the branch flow passage 30,
c) moving the valves 60A, 60B to their respective closed positions 62A, 62B, respectively obstructing the branch flow passage and the return flow passage, closing off the degasification zone from the main flow channel,
d) closing the gas outlet 80,
e) operating the pressure reduction device to lower the pressure in the degasification zone relative to the pressure in the main flow channel,
f) opening the first valve, the second valve, and the gas outlet,
wherein during step e) gas dissolved in the liquid is separated from the liquid and wherein during and/or after step f) liquid in the degasification housing is returned to the main flow channel through the return flow passage and the separated gas is expelled through the gas outlet.

The abovementioned step d) can be performed by operating the pressure reduction device in the depicted embodiment. In figures 2 and 3, the movement 721 of the piston 72 towards the low pressure position leads the non-return valve 60B and the valve 60A for the branch flow passage 30 to close and the decreasing liquid level below a first predetermined level 88 leads the outlet closing body 84 of the floater 841 to close off the gas outlet tube 82. When the valves 60A, 60B and the gas outlet 80 are closed, the operation of the pressure reduction device 70 lowers the pressure in the degasification zone 42. The end of the movement of the piston 72 in the cylinder 74 by the piston actuator 76 towards the retracted position 724 from the extended position 722 is depicted in figure 3. Here above the liquid in the degasification zone 42, free gas 3 has formed by separating from the liquid. As the valves and the gas outlet are opened, the free gas 3 may evacuate the degassing device through the gas outlet and the liquid in the degasification zone 42 may return to the main flow through the return flow passage 50. As a result, the liquid level will rise to the overflow threshold level 89 again.

In the depicted embodiment, prior to step f), the pressure in the degasification zone is increased to substantially the pressure present during step b). This facilitates the disengagement of the outlet closing body 84 of the floater 841 from the outlet tube 82 with the result that the outlet tube 82 is reopened, and the opening of the valves.

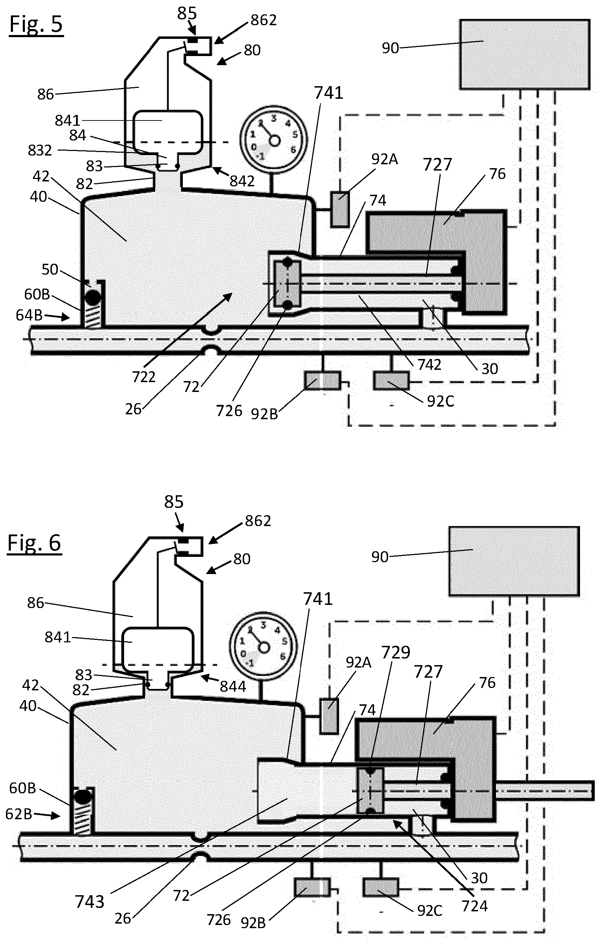

Turning to figures 5-7, the floater chamber 86 of the gas outlet 80 defines a gas outlet opening 862 through which free gas may be evacuated. In this embodiment the outlet closing body 84 of the floater 841 comprises a protrusion 83 respectively located on a lower side 832 of the floater 841. The protrusion 83 located on the lower side 832 of the floater 841 has an outer dimension that substantially matches an inner dimension of the outlet tube 82. In doing so the closing of the degasification zone from the outside can be improved because, in operation during step d), the protrusion 83 is forced in the outlet tube 82. By closing the outlet tube 82 directly when the liquid levels drops sufficiently, the amount of free gasses in the degasification zone is reduced, enabling a faster pressure reduction. Because the protrusion seals the outlet tube 82, the backflow preventer does not need to be present. However, the protrusion and the backflow preventer may also be combined.

The floater 841 is configured to actuate the overflow valve 85; when a liquid level is at an overflow threshold level (also second predetermined level) 89, the floater 841 is moved to an upper position 846 where it closes the overflow valve, closing off the gas outlet opening. This occurs when too much liquid starts to accumulate inside the degasification zone and the device is at risk of overflowing; the floater 841 together with the floater chamber 86 prevents the overflowing from happening. Herein, the pressure inside the degasification housing is at an overpressure with respect to the outside. This pressure may be equal to a system pressure, i.e. the pressure in the main flow channel 20.

To improve the closing, the protrusion comprises an O-ring or a double lip seal to even better seal the gas outlet opening 862 and the gas outlet tube 82. The O-ring or double lip seal defines the closing location.

Further, the cylinder 74 comprises a flared end 741 wherein the branch flow passage extends between the piston 72 and the cylinder 74 when the piston is in the idle pressure position 722.

The degassing device also comprises three sensors 92A, 92B, 92C and a control unit 90 that is configured to read out the sensors and to control the piston actuator 76. By measuring the pressure in the degasification zone with sensor 92A and the pressure in the manifold 405 or main flow channel 20 with sensor 92B, a pressure difference can be determined by the control unit 90 and the piston actuator 76 can be operated as a function of these measurements. Also, the temperature of the liquid can be determined using a temperature sensor 92C. By determining the temperature of the liquid a pressure at which the liquid starts boiling can be determined and avoided. The temperature sensor may also measure a temperature of the liquid in the manifold 405 or main flow channel 20 and the control unit reads out the temperature sensor and can subsequently control the pressure reduction device.

Besides using separate sensors 92A, 92B, 92C to determine the state of the degassing device and more particularly the pressure in the degasification zone 42, the control unit 90 may also be configured to measure the current necessary to move the piston 72. Based on the current, the force acting on the piston can be determined which gives a measure for the pressure in the degasification zone 42.

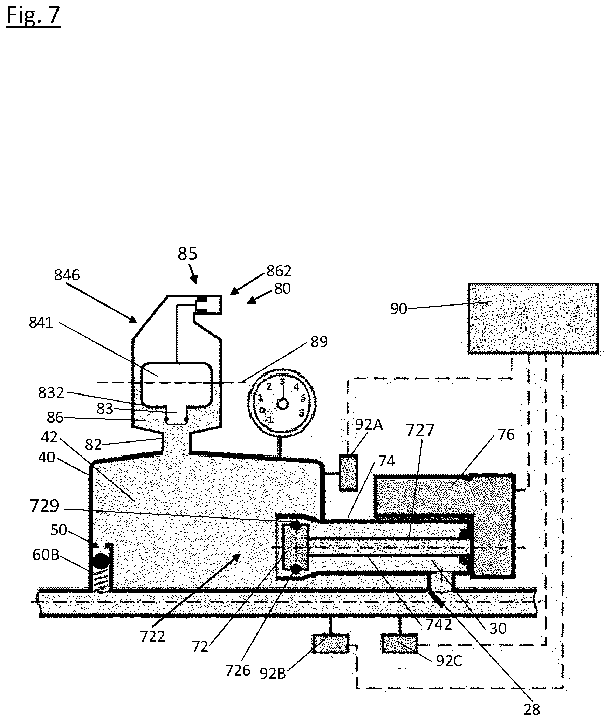

In figure 7, an embodiment of the invention is depicted wherein the main flow channel doesn't comprise a constriction, but comprises a branch flow separator 28 protruding into the main flow channel. The branch flow separator is configured to branch off a portion of the main flow into the degasification zone.

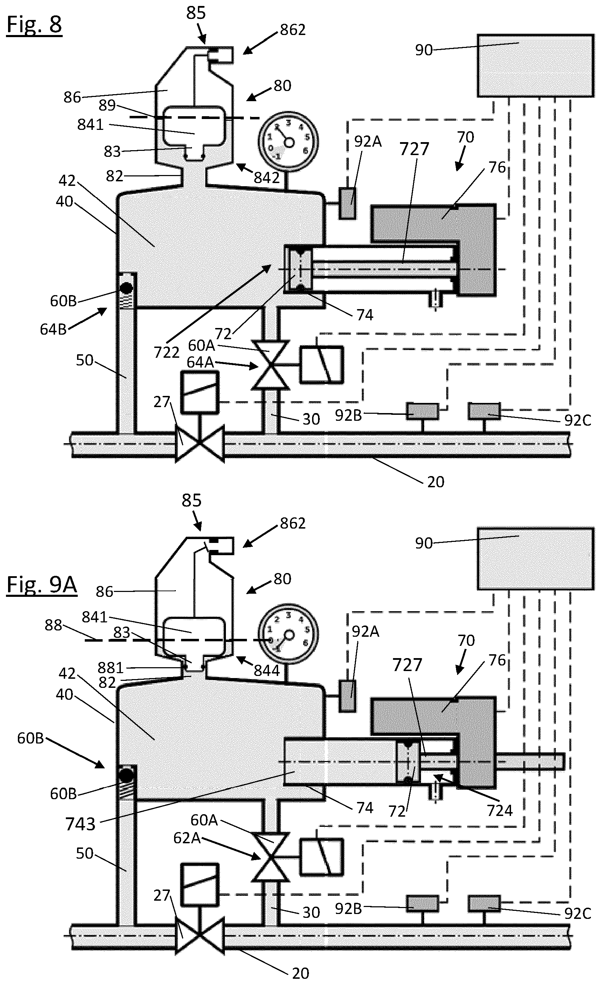

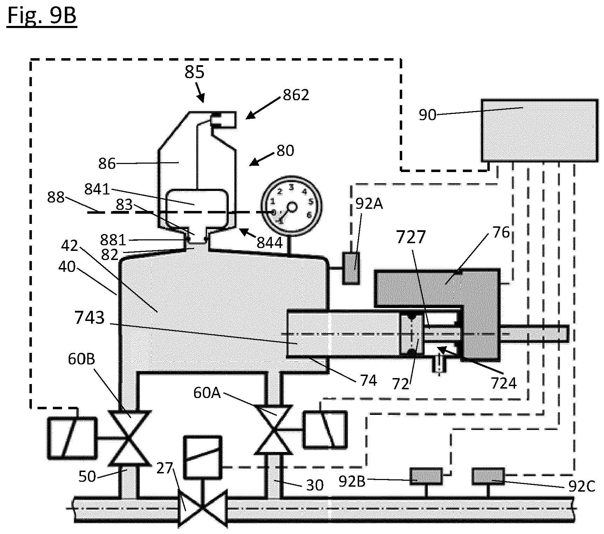

Moving to figure 8 and figure 9A, an embodiment is shown where the pressure reduction device 70 is not integrated with the valve 60A that closes of the branch flow passage 30. Instead, the branch flow passage can be closed off by an actuated valve 60A that may be moved from the open position 64A to the closed position 62A by the control unit 90. Similarly, the control unit 90 may also control a main flow valve 27 that is configured to temporarily close off the main flow channel 20 to branch off liquid into the degasification housing. In figure 9B, an embodiment similar to the embodiment of figure 9A is shown, with the difference that the second valve 60B is an actuated valve controlled by a control unit 90, instead of a non-return valve.

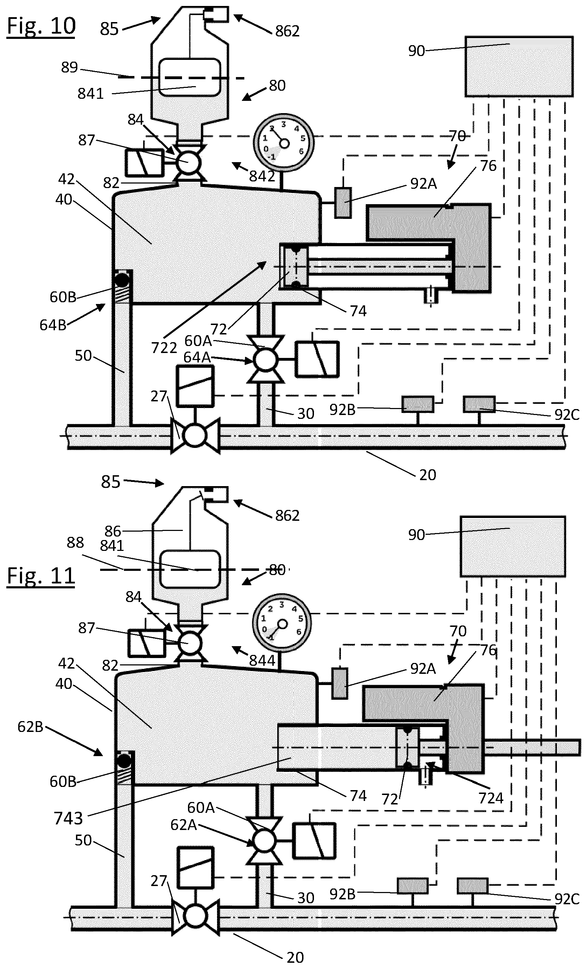

The embodiment depicted in figures 10 and 11 is largely similar to the embodiment depicted in figures 8 and 9A. The main difference lies in the outlet closing body 84 comprising a gas outlet valve 87, in particular a ball valve, that may be controlled by the control unit 90, rather than the outlet closing body 84 being formed by a lower part of the floater 841. The gas outlet valve allows 87 gas and/or liquid to flow between the outside and the degasification zone in an open position and closes off the degasification zone in a closed position. Soon after the start of the degassing cycle and of the operation of the pressure reduction device 70, the gas outlet valve is closed. At this time, the liquid level is at the overflow threshold level and the outlet valve 87 is submerged. Because the outlet valve 87 is submerged at the start of the pressure reduction step, the entire degasification zone 42 is filled with liquid and the degassing of the liquid can be performed more efficiently than if more liquid and/or more gas would initially be present in the inner volume.

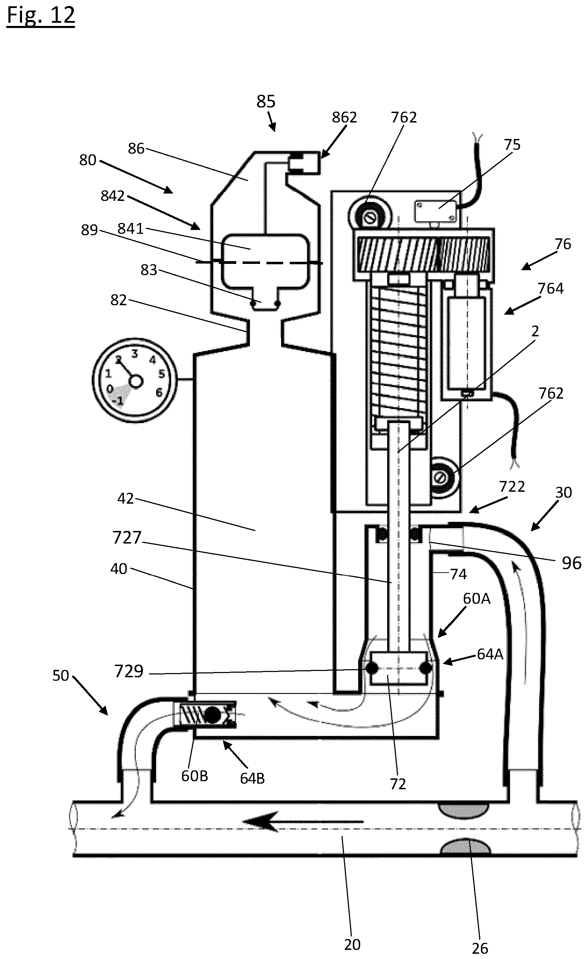

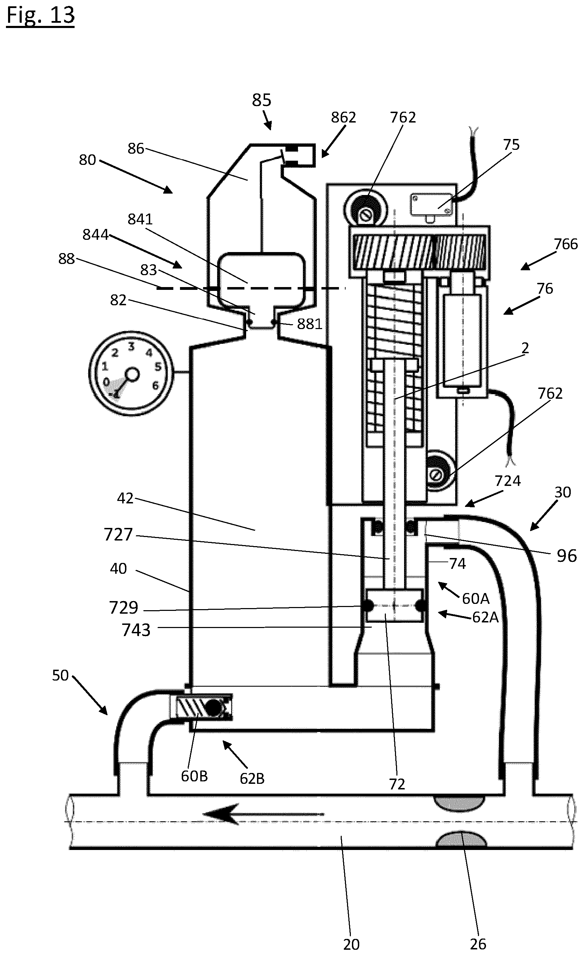

Turning to figures 12 and 13, an embodiment is depicted wherein the piston is moveable in a direction 2 that is substantially orthogonal to the main flow channel. By orienting the pressure reduction device 70 in this manner, the degassing device takes up less lateral space and may be used in narrow spaces. Herein, the cylinder 74 comprises a flared end 741 wherein the branch flow passage extends between the piston 72 and the cylinder 74 when the piston is in the idle pressure position 722.

Further, the piston actuator 76 is fixed to the housing via two resilient members 762. Besides damping vibrations, the resilient members allow the piston actuator 76 to resiliently move between a first actuator position 764 and a second actuator position 766. In figure 10, the piston actuator is shown in the first actuator position 764 where it engages a biased switch 75 located above the piston actuator. When the pressure reduction device is operated and the pressure inside the degasification zone 42 is reduced, the piston will be pulled away from the switch together with the piston actuator 76. When a predetermined minimum pressure is achieved, e.g. a pressure just above the vapour line of the liquid, the piston actuator moves to the second actuator position 766, disengaging the biased switch 75. Therefore, when in operation, when a force necessary to move the piston to the retracted position 724 exceeds a predetermined value corresponding to a pressure inside the degasification housing, the force moves the piston actuator 76 away from the switch 75, wherein the disengagement of the switch interrupts the operation of the pressure difference device. Besides the mechanical approach using a switch, it will be understood that a stress gauge or a strain gauge in combination with the control unit 90 may achieve the same result; a measured stress or strain value can then be used by the control unit to determine a pressure in the degasification zone.

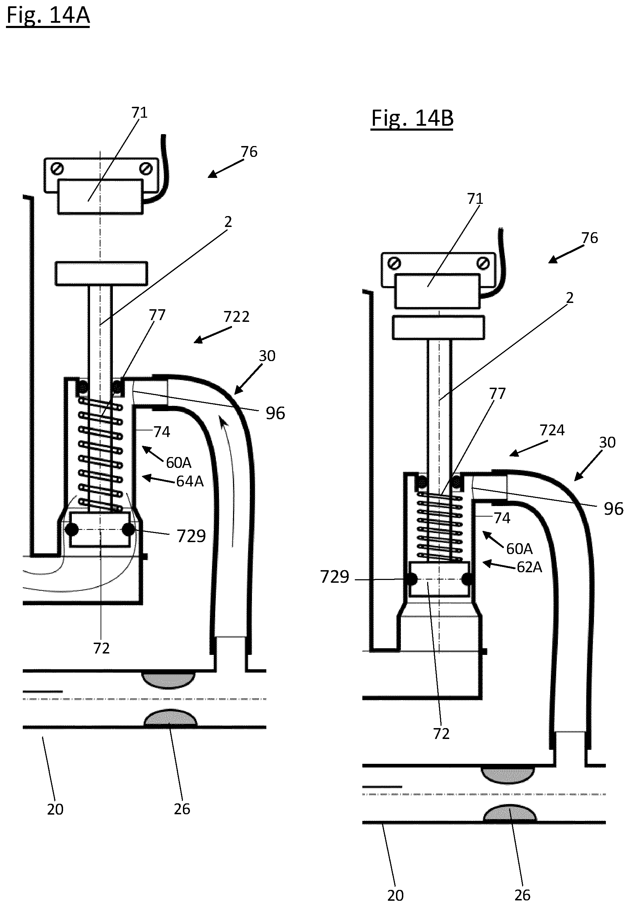

Turning to figures 14A and 14B, an embodiment of a piston actuator 76 is depicted wherein the piston actuator comprises an electromagnet 71 that is configured to attract and/or repel the piston 72. By attracting the piston 72 in the idle pressure position 722, the piston 72 is moved into the low pressure position 724. In the depicted embodiment, the piston actuator further comprises a spring 77 that is configured to move the piston back to the idle pressure position 722. This action may also be done by a repulsive force of the magnet 71.

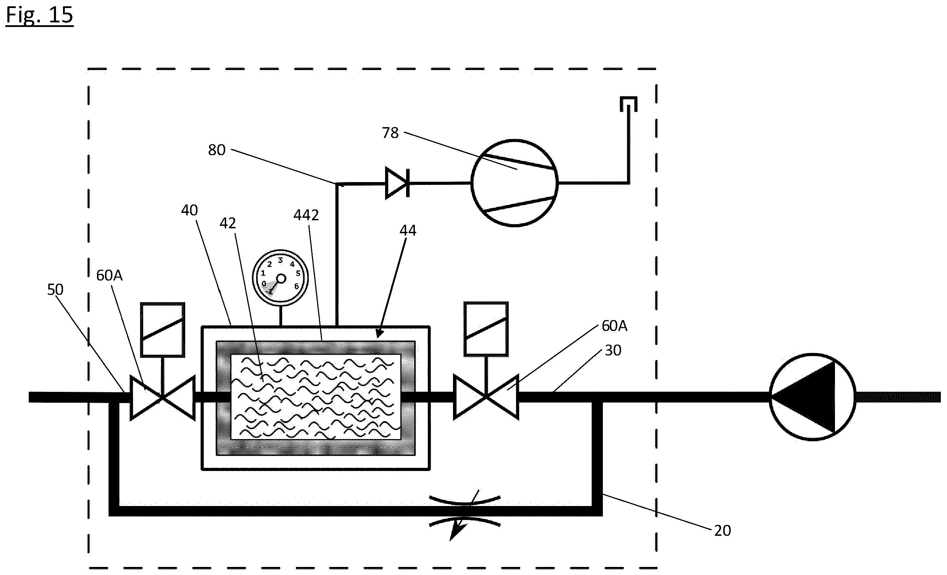

Turning to figure 15, a schematic depiction of an embodiment not according to the invention is shown. Herein the pressure reduction device is a vacuum pump 78 that is connected to the gas outlet 80, wherein the outlet closing body comprises a gas outlet valve 87 and a gas outlet tube 82. Further, the degassing device comprises a porous chamber 44 that is located within the volume of the degasification housing 40.

When a first valve 60A is open, a portion of the main flow is branched off by the branch flow passage 30 and flows into the porous chamber 44. When the first valve 60A and a second valve 60B are closed, the vacuum pump is operated and the pressure inside the degasification housing is reduced. This leads to dissolved gas in the liquid to separate from the liquid and the gas may then be sucked through a porous element 442 of the porous chamber and may be evacuated by the vacuum pump. Because the porous chamber 42 is only permeable to gases and not to the liquid, the liquid remains in the circuit. After the separated gas has been evacuated, the valves 60A, 60B are opened and the liquid returns to the main flow channel via the return flow passage.

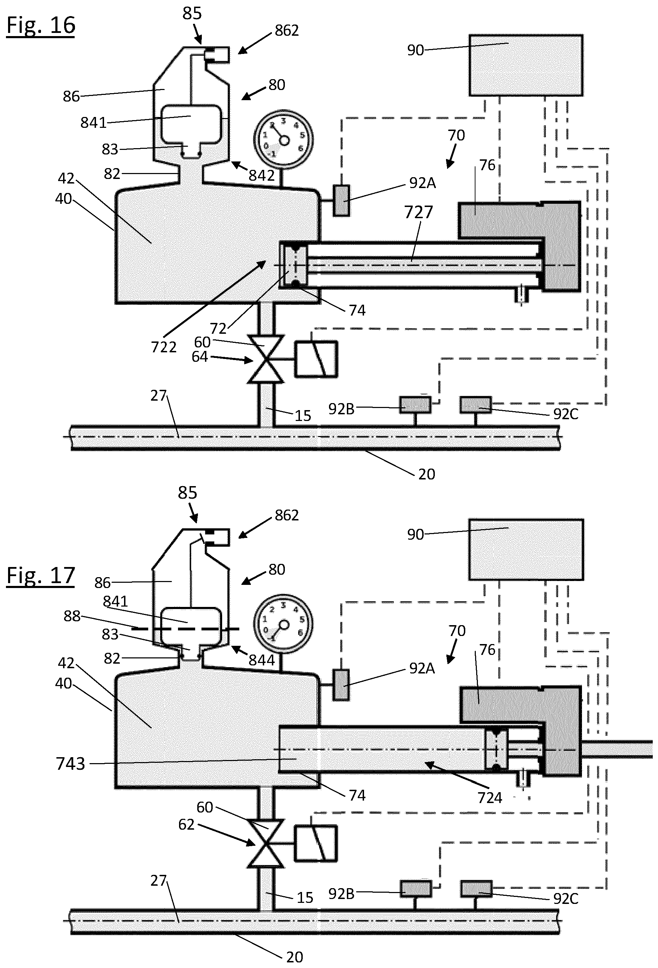

Turning to figures 16 and 17, a similar embodiment to that of figures 8 and 9 is depicted. The main difference being the presence of only one flow passage 15 that allows communication between the degasification zone 42 and the main flow channel 20. In the depicted embodiment, the degasification zone 42 is filled with liquid from the main flow channel 20 by partially retracting the piston from the extended position. Subsequently, at least one valve 60 is moved from an open position 64 to a closed position 62 and the pressure reduction device is operated, further retracting the piston. Thereafter, when the liquid has been degassed, the valve is moved to the open position 64 and the liquid returns to the main flow channel 20 through the flow passage 15 by fully extending the piston. This occurs at the end of a degassing cycle. By using a single valve 60, the device can be kept smaller and easier to operate in comparison with a device using multiple valves.

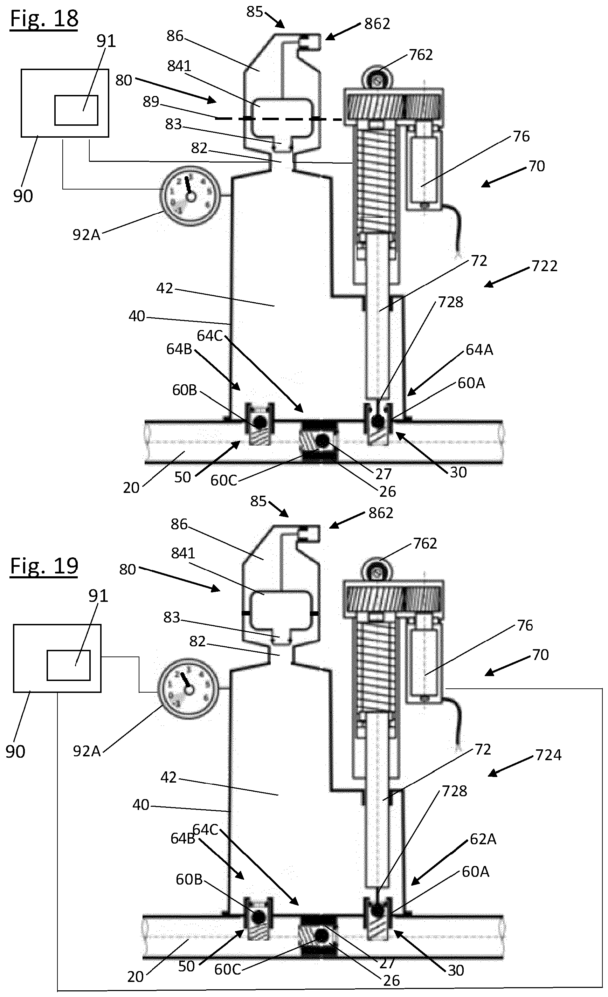

In figures 18, 19, 20, and 21 a similar device to that of figures 12 and 13 is depicted. Here, in the main flow channel 20, the constriction 26 comprises a non-return valve 60C. The first valve 60A and second valve 60B also are non-return valves. To be able to allow the liquid to flow through the first valve 60A, the piston 72 comprises an actuator end 728 that is configured to move the first valve to the open position 64 in the extended state 722 of the piston.

The piston comprises an actuator end 728 and the first valve is a non-return valve. Herein, the actuator end engages the first valve in the open position, wherein the movement of the piston from the retracted state to the extended state moves the first valve from an idle closed position to the open position via the actuator end. The movement of the piston from the extended state to the retracted state moves the first valve from the open position to an idle closed position via the actuator end.

Here, the control unit 90 comprises a first and/or second test module 91 that may be comprise digital or analogue components. The test module is configured for determining the presence of flow in the manifold or main flow channel so that a degassing operation is not performed in vain.

In figure 18, the test module reads out the pressure sensor 92A to determine the pressure inside the degasification zone. This pressure is similar to that in the manifold 405 or main flow channel because the first, second and third valve 60A, 60B, and 60C are all open. After the test module closes the first valve 60A via the actuator end 728 in figure 19, the flow in the manifold 405 or main flow channel causes a pressure drop in the degasification zone because of the flow that is still flowing out of the second valve 60B.

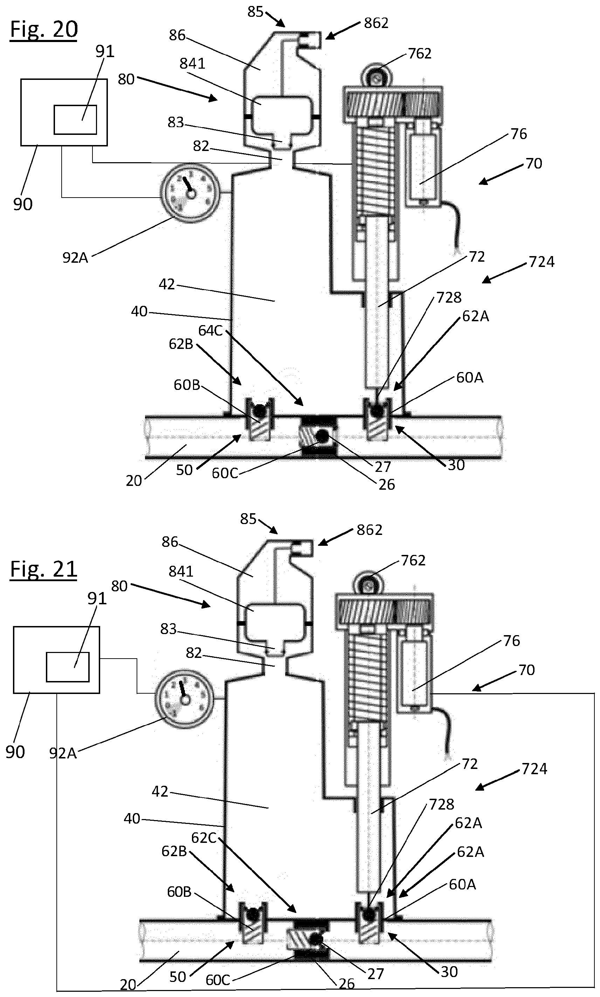

Because of the lower pressure in the degasification zone and the second valve is a non-return valve, the second valve 60B moves to the closed state 62B. This is shown in figure 20. After a period of time, the test module 91 reads out the pressure sensor 90A a second time.

The test module 91 then compares the second measured pressure with the first measured pressure to determine a difference. The difference is compared with a threshold value. Because a flow is present, the difference is larger than the threshold value and no difference signal is generated by the test module.

Turning to figure 21, the same test module has performed the same sequence as in figures 18 and 19. However, because no flow is present in the manifold or main flow channel, no pressure drop has occurred after the closing of the first valve 60A. when the test module compares the second measured pressure with the first measured pressure, the difference is very small. Because the difference is smaller than the threshold value, the test module generates a difference signal indicative of a lack of flow.

Herein, when the difference is larger than the threshold value, the control unit periodically carries out a degassing cycle, and when the difference is smaller than the threshold value, the control unit does not carry out any degassing cycle. This way, no degassing cycles are performed when there is no flow in the manifold or main flow channel.

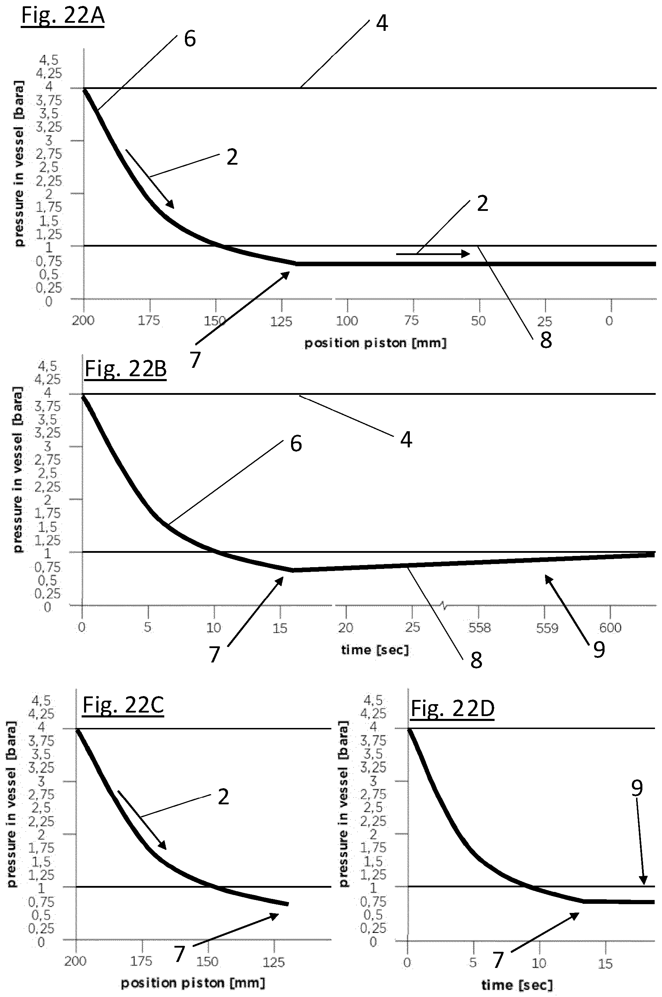

Turning to figures 22A-24B, the consequences of another test module are depicted for different situations. Herein, the test module 91 closes the at least one valve and subsequently operates the pressure reduction device to reduce the pressure. Subsequently, the at least one pressure sensor is read out, and after a period of time, the at least one pressure sensor is read out a second time. The second measured pressure 9 is then compared with the first measured pressure 7 to determine a difference and the test module generates a difference signal. It will be understood that the pressure reduction device can also be used to increase the pressure for the test procedure.

In figures 22A, 23A, and 24A, an additional step is carried out by the test module. Herein, the test module is configured to maintain a constant or substantially constant pressure in the degasification zone over a test time period by measuring the pressure in the degasification zone, comparing the measured pressure to a target pressure and operating the pressure reduction device to maintain the pressure in the degasification zone at the target pressure.

The testing module then measures an operating parameter of the pressure reduction device in time and is configured to generate a difference signal indicative of a leak when the measured operating parameter exceeds a predetermined threshold value, wherein said operating parameter is in particular the movement of a cylinder and/or a power consumption of the pressure reduction device.

In figures 22A and 22B, both graphs show a leakage of air into the degasification housing. In figure 22A, the pressure is reduced to below atmospheric pressure 8 and the first pressure 7 is measured. Thereafter, the piston is moved to the retracted state over time 2. This means that the pressure reduction device is operated to reduce the pressure but that the pressure remains constant. This is only possible is case of a leak from the outside of the degasification housing in. Based on the presence of a leak, a difference signal is generated.

In figure 22C, no leak is present. Here, the pressure is reduced to below atmospheric pressure 8 and the first pressure 7 is measured. Subsequently, the piston does not need to be moved to maintain the first pressure and is kept at a constant position.

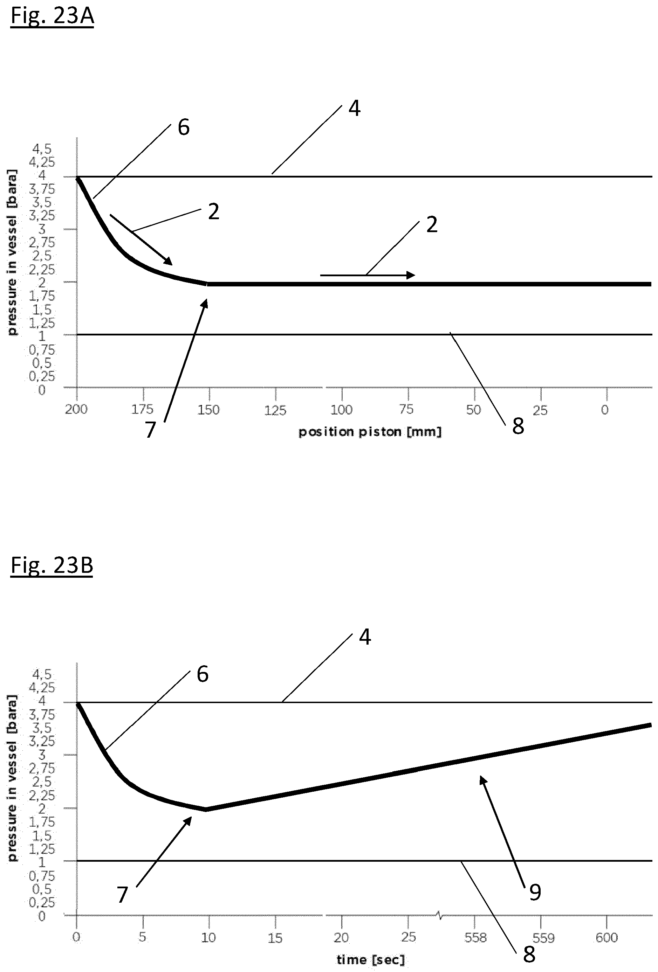

In figure 22B, the pressure reduction device is operated to reduce the pressure to below atmospheric pressure and is subsequently stopped from operating. If no leak is present, the pressure would remain constant over time. However, if a leak is present, the pressure would rise. If the pressure rises to atmospheric pressure and not further, a leak is present from the outside into the degasification zone. Based on the presence of a leak, a difference signal is generated indicative of a leakage of air from outside into the degasification housing. If the pressure rises further to above the atmospheric pressure, a leak is present between the degasification zone and the manifold or main flow channel. This is also depicted in figure 23B.

In figure 22D, no leak is present. Here, the pressure is reduced to below atmospheric pressure 8 and the first pressure 7 is measured. Subsequently, time passes and the second pressure 9 is measured. Because the first and second pressures are substantially the same, it can be concluded that no leak is present.

In figure 23A and 23B, both graphs show a leakage from the manifold or main flow channel into the degasification zone. In figure 23A, the pressure is reduced to above atmospheric pressure but below the pressure in the manifold 405 or main flow channel 20. If the pressure reduction device must be operated to decrease pressure, which is the case, the manifold or main flow channel leaks into the degasification zone. Accordingly, a difference signal is generated which is indicative of a leakage from the manifold or main flow channel into the degasification housing.

In figure 23B, the same leak is present. First, the pressure is reduced by the operation of the pressure reduction device which is then stopped. If no leak were present, the pressure would remain constant. However, the pressure rises towards the pressure in the manifold or main flow channel 20. This indicates a leak from the manifold or main flow channel into the degasification zone. Accordingly, a difference signal is generated which is indicative of a leakage from the manifold or main flow channel into the degasification housing

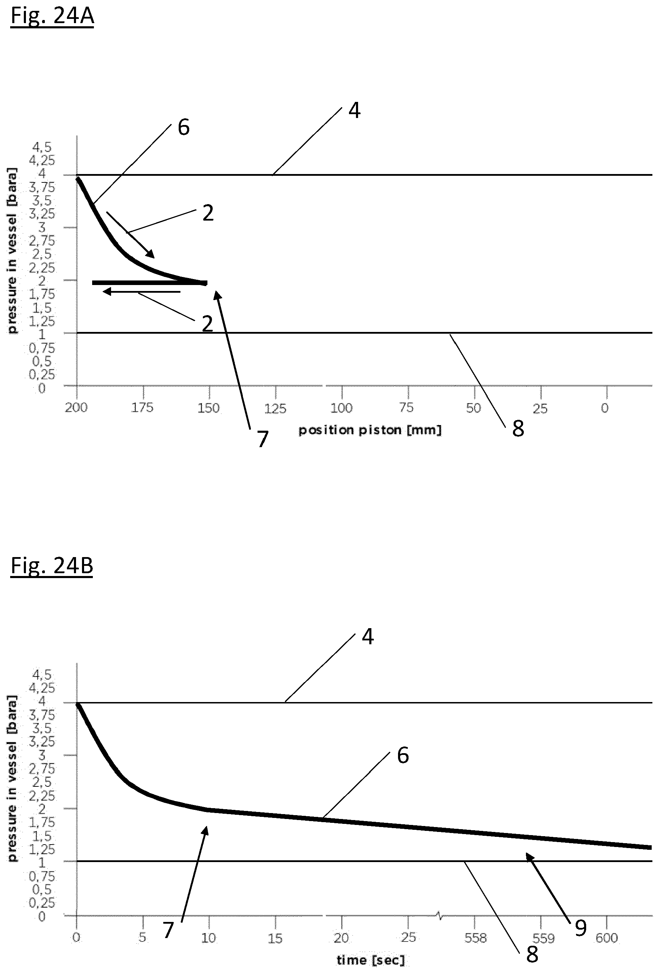

Turning to figures 24A and 24B, both graphs show leakage from the degasification zone to the outside. In figure 24A, the pressure is reduced by the pressure reduction device. If no leak were present, the pressure would remain constant without moving the piston. However, because the liquid is leaking to the outside and because the pressure in the degasification zone 6 is higher than the atmospheric pressure, the pressure reduction device is operated to increase the pressure to keep the pressure constant. This indicates a leak to the outside from the degasification zone. Accordingly. A difference signal is generated which is indicative of a leakage from inside the degasification housing to the outside.

In figure 24B, the pressure is reduced by the pressure reduction device and the pressure reduction device is then stopped. If no leaks were present, the pressure would remain constant. However, because the liquid leaks to the outside from within the degasification zone, the pressure in the degasification zone 6 decrease over time towards the atmospheric pressure.

It will be understood that each test module can be used after the other and that the testing can also be done prior to performing a degassing method. Also, it will be understood that the methods can be performed periodically for the maintenance of the degassing device.

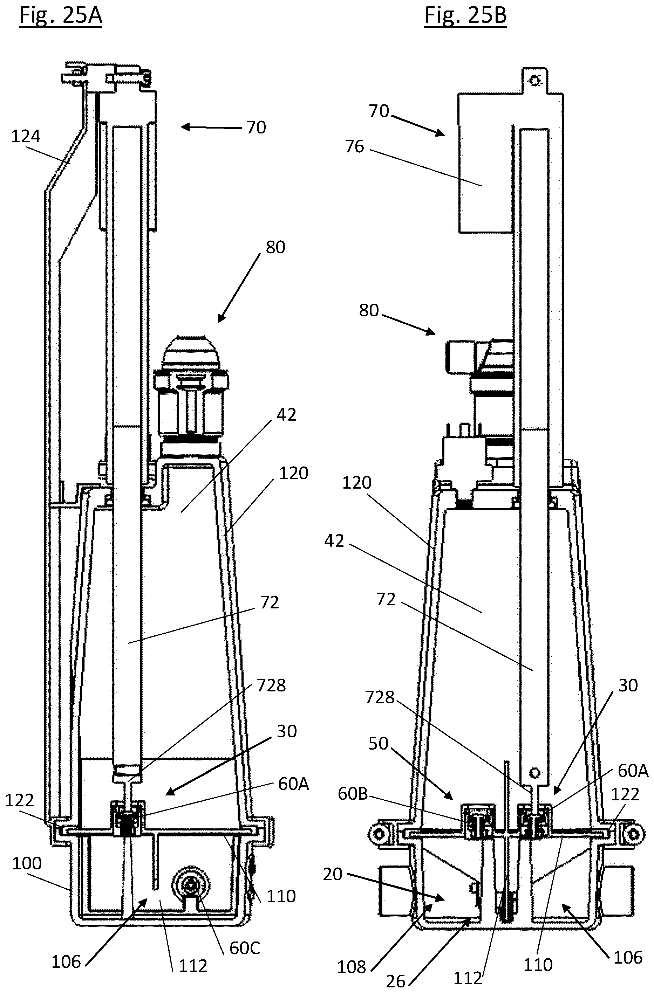

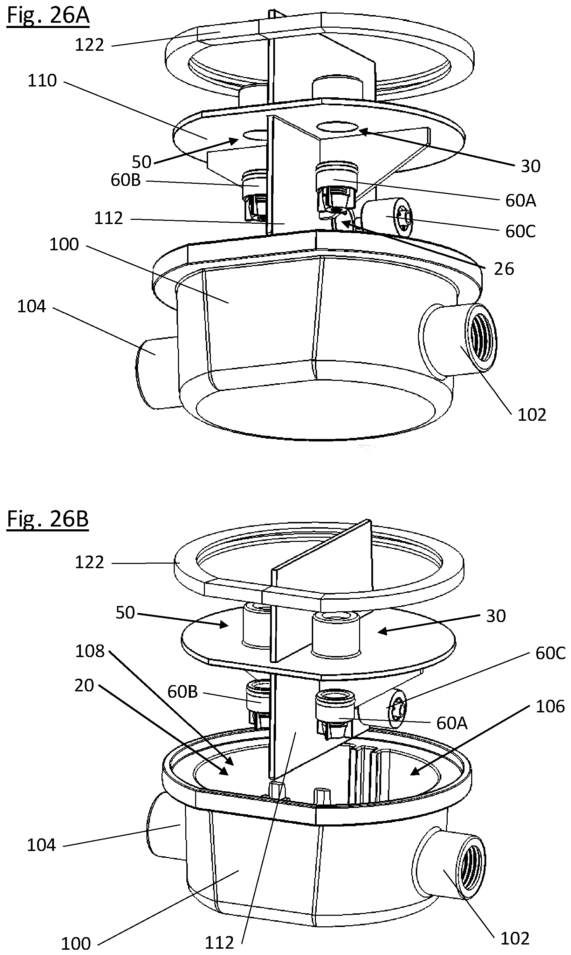

Turning to figure 25A, 25B, 26A, and 26B, the manifold or main flow channel 20 is defined by a cup 100 comprising an inlet 102 and an outlet 104 and a lid 110 from which a plate 112 protrudes downwards, wherein the plate divides the cup in an inlet side 106 and an outlet side 108 and allows fluid communication from the inlet side to the outlet side only through the constriction 26. The lid 110 separates the main flow channel 20 from the degasification zone 42 and comprises two valves 60A and 60B respectively located in a branch flow passage and a return flow passage. The degasification housing comprises a hood 120 that is placed on top of the lid. To prevent leaks between the lid, hood, and cup, a seal 122 is present. Further, a mounting bracket 124 is present to which the cup 100, the hood 120, and the pressure reduction device 70 are connected. Such a mounting bracket may be used to mount the degassing device to a wall or other structure.

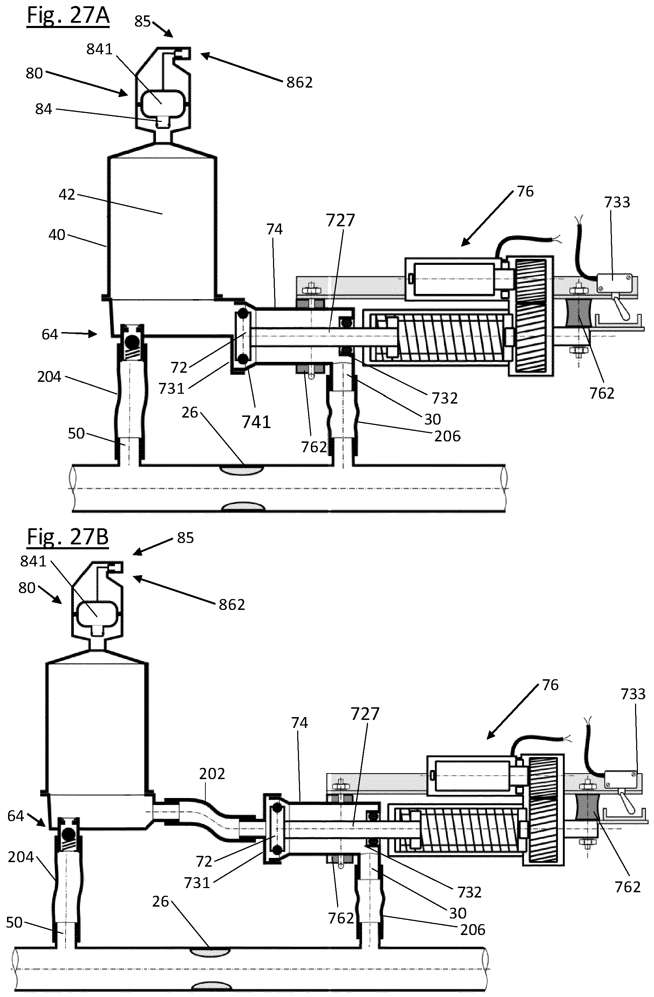

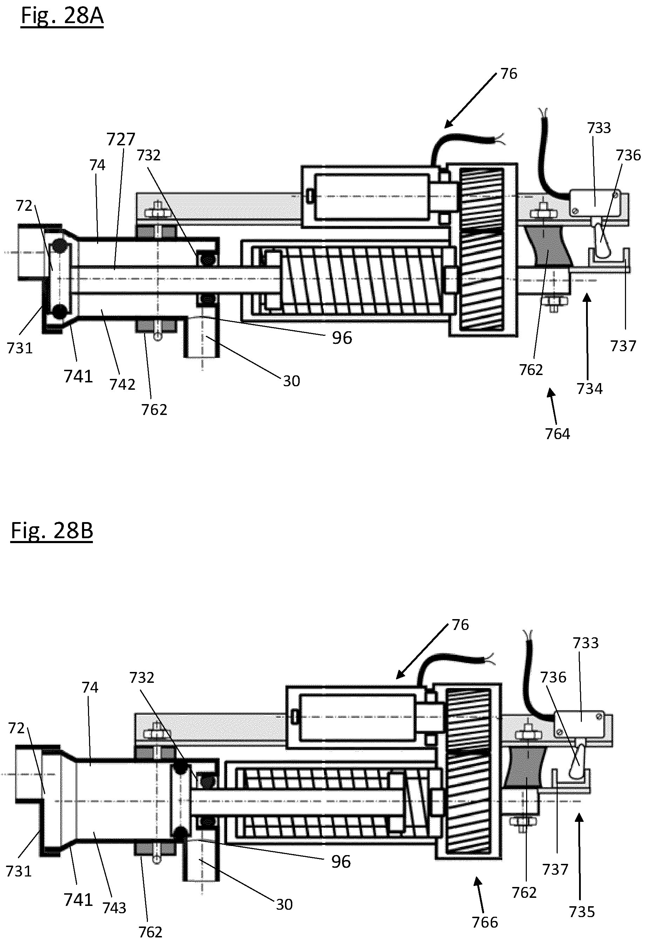

In figures 27A, 27B, 28A, and 28B, the degassing device comprises a first abutment 731 and a second abutment 732. These abutments can be used for the piston 72 to abut against. Also, the piston actuator 76 is fixed to the degasification housing via two resilient members 762, one is located near a direction switch 733 and another is located around the cylinder 74. These resilient members 762 allow the piston actuator to move and, when the piston 72 abuts against the first or second abutments 731, 732, the piston actuator moves itself relative to the degasification housing to a first actuator position 764 or a second actuator position 766. In the figures, the extension of the piston against the first abutment 731 moves the piston actuator into the first actuator position 764 and the retracting against the second abutment 732 moves the piston actuator into the second actuator position 766.

A direction switch 733 operates the piston actuator in a first direction when it is in a first switch position 734 and operates the piston actuator in a second direction when it is in a second switch position 735. As depicted in figures 28A and 28B, the movement from the first actuator position 764 to the second actuator position 766 moves the direction switch from the first switch position 734 to the second switch position 735 and vice versa. When the abutments are reached, a switch lever 736 of the direction switch engages a switch bracket 737. The movement of the piston actuator then pushes or pulls the switch lever 736 against the switch bracket 737 resulting the switching of direction. This causes the piston to move back and forth in an automated manner when the piston actuator 76 is operational and causes the degassing device to automatically start a new degassing cycle when a prior cycle has been completed. The direction switch may comprise a delay component that delays the operation of the piston actuator for a predetermined time period when the switch position is changed. In this way the piston remains idle in the extreme positions for a predetermined time period before it starts moving in the opposite direction.

In order to be able to change the shape of the space that is taken up by the degassing device, various parts may be connected by pipes. In figure 27A, the pressure reduction device is connected to the main flow channel via a pipe 206. Also, the degasification zone 42 is connected to the main flow channel via a pipe 204. Additionally, in figure 27B, the pressure reduction device is connected to the degasification zone via a pipe 202. In this way, one component is subdivided into two smaller components. This embodiment was found to be useful for floor heating systems which often have limited available space for a relatively large component. The two smaller components are easier to fit in a floor heating system.

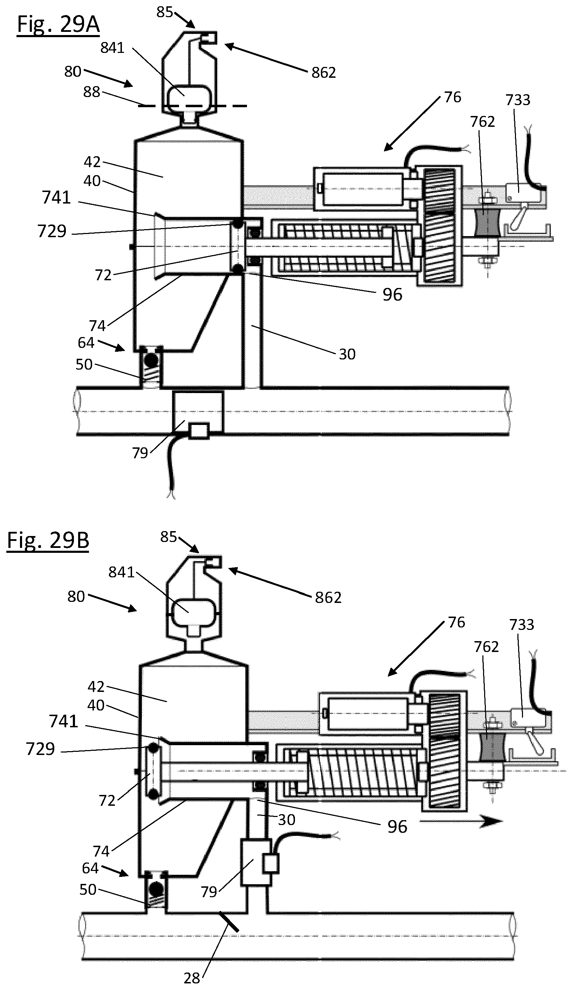

In figure 29A and 29B, a similar embodiment to that of figure 7 is depicted. In figure 29A, a flow switch 79 is located in the manifold or main flow channel. This flow switch 79 may also act as the constriction. When no flow is present in the manifold or main flow channel, the flow switch will prevent the pressure reduction device from operating. This prevents the degassing device from operating when the liquid in the degasification zone is not refreshed after a cycle. Alternatively, the flow switch 79 may also be located in another part of the degassing device. An example thereof is shown in figure 29B where the flow switch is located in the branch flow passage 30.

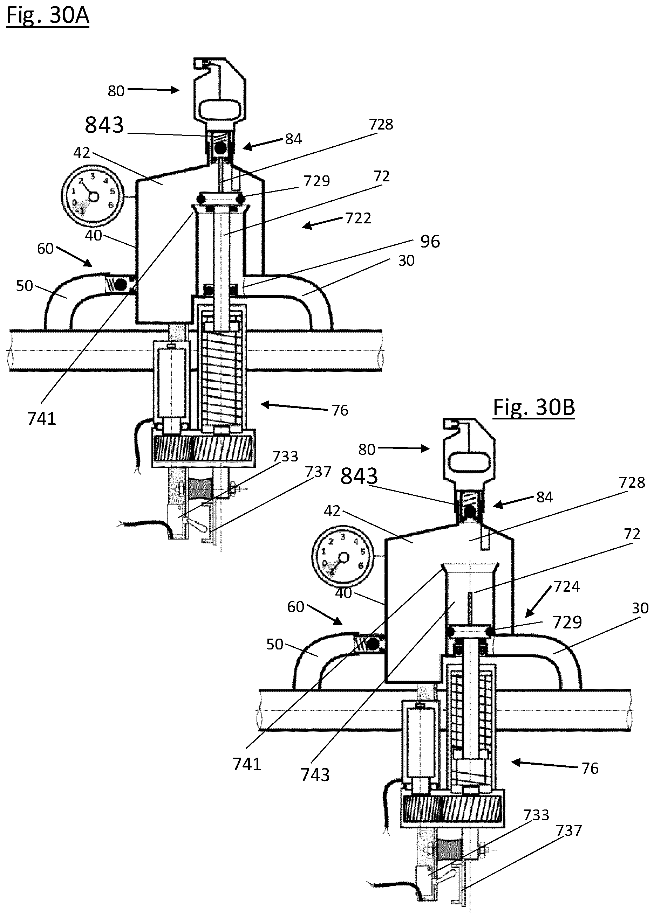

In figures 30A and 30B, the actuator end 728 is configured to move the outlet closing body 84 being an outlet closing non-return valve 843 into and from an open state. To this end, when the piston 72 is moved into its extended state 722, the actuator end 728 pushes the non-return valve 843 open, allowing communication between the degasification zone 42 and the outside. When the piston 72 is moved to the retracted state 724, the actuator end 728 disengages the non-return valve 843 and the non-return valve closes causing the degasification zone 42 to be disconnected from the outside.

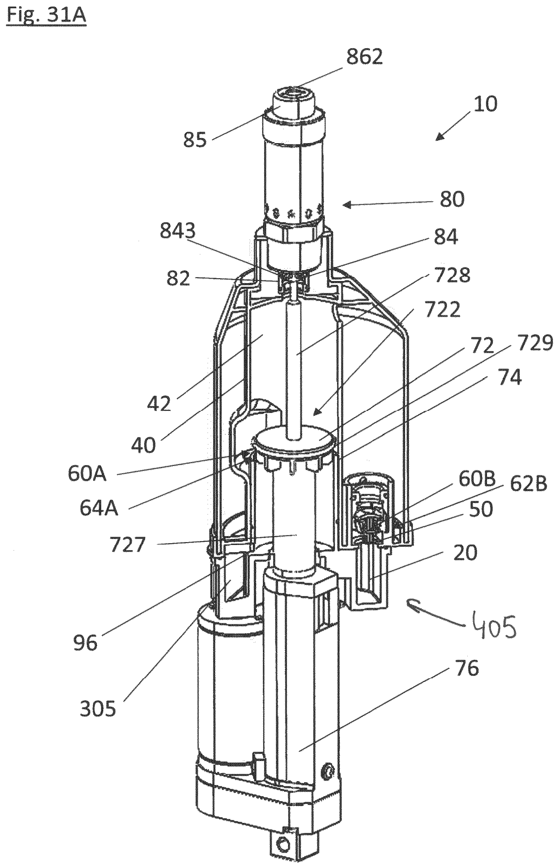

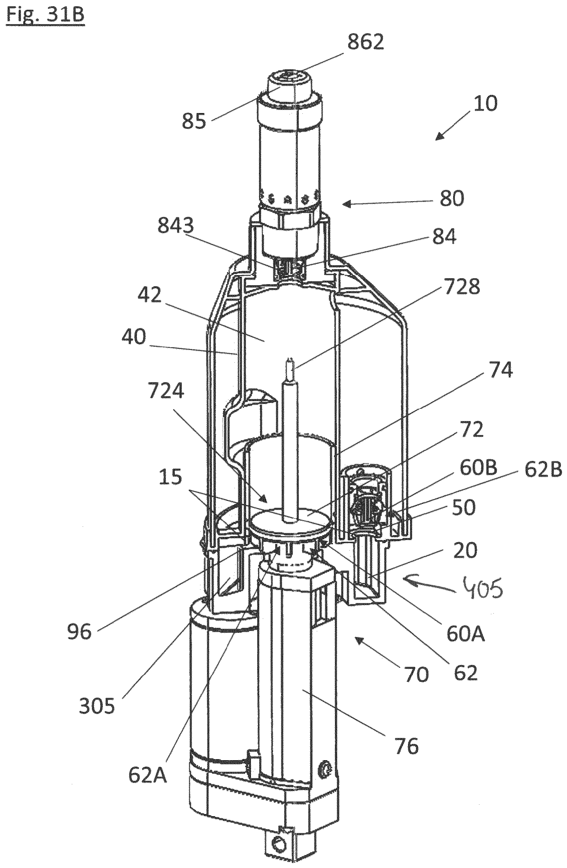

Figures 31A-31E shows another embodiment which is bi-directional and works regardless of the direction of the main flow through the degassing device. An advantage is that the person who installs the device does not have to think about the direction of the main flow and the way in which the degassing device should be installed. Figures 31A and 31B show a cutaway of the degassing device. In figure 31A, the piston is in the extended idle pressure position 722. In figure 31B, the piston is in the retracted low pressure position 724.

Like in the embodiments discussed in relation to the previous drawings, after the degassing of the liquid has taken place, the separate gas must be evacuated from the device. To this end, a gas outlet 80 is present in the degasification housing and comprises an outlet tube 82 and an outlet closing body 84. This part can have the same configuration as shown in the earlier embodiments and for this reason not shown again.

The first valve 60A is integrated into the piston 72 like in embodiments discussed in relation to preceding drawings, e.g. figures 1 - 4. The second valve 60B is similar to the second valve 60B of those embodiments as well.

This embodiment comprises a manifold 405. In the manifold, a main flow channel 20 for a main flow 400 and a bypass flow channel 305 for a bypass flow 401 are defined.

In figure 31A, the actuator end 728 of the piston 72 opens the outlet closing body 84 comprising an outlet closing non-return valve 843. Fluid can flow from the bypass channel 305 through the cylinder entry location 96 and past the piston 72 into the degasification zone 42, similar to what is shown in e.g. figures 5, 12, 28A, 29B, and 30A. in figure 31B, the piston 72 is in the low pressure position 724. Fluid flow from the bypass channel 305 into the degasification zone 42 is not possible when the piston 72 is in the low pressure position 724.

Like in the embodiments discussed in relation to the previous drawings, the degassing device 10 comprises an overflow valve 85 defining a gas outlet opening 862. The overflow valve 85 is configured to close the gas outlet opening 862 when a liquid level in the degassing device 10 is higher than an overflow threshold level 89. The overflow threshold level 89 is higher than the outlet closing body 84. The overflow valve 85 is configured to open the gas outlet opening 862 when the liquid level in the degassing device 10 is lower than the overflow threshold level 89. This way, gas can escape from the degassing device 10.

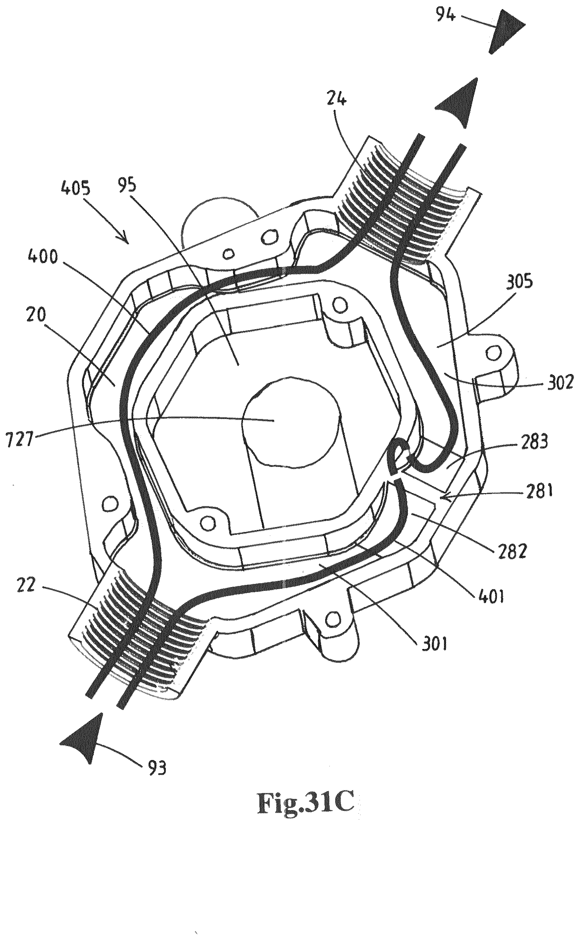

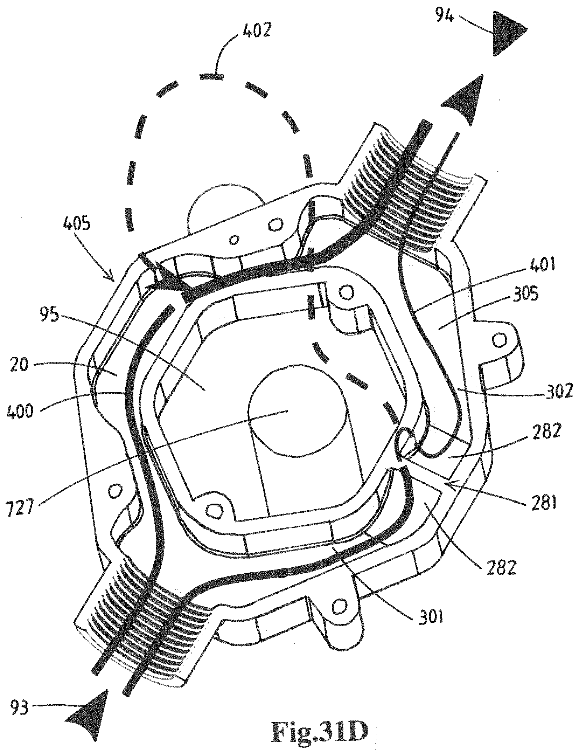

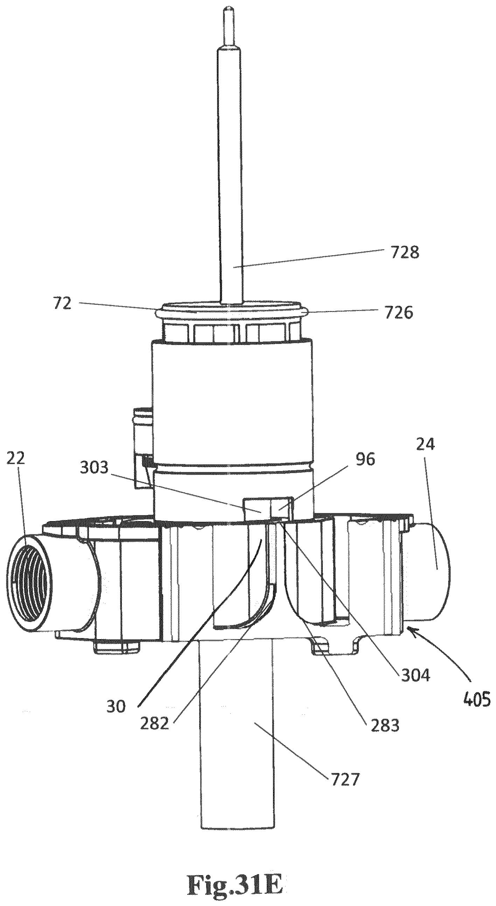

Figure 31C shows a perspective view of a cross section of the manifold of the degassing device of the embodiment shown in figures 31A and 31B, wherein some parts have been removed to aid understanding and wherein the flow lines are drawn in. Figure 31C shows a situation wherein there is no flow through the degasification zone, because the first valve 60A is closed and/or because the second, non-return valve 60B is closed. Figure 31D shows a situation in which a part of the main flow flows through the degasification zone. Figure 31E shows a perspective view of a cross section of the same parts as figure 31C, but along a perpendicular plane.

The main flow channel 20 and the bypass channel 305 bifurcate and merge between the first fluid connection 22 and the second fluid connection 24. The cylinder 74 extends through a space 95 between the main flow channel 20 and the bypass channel 305. The flow which enters the degasification zone via the first fluid connection 22 is divided in a first, main flow 400 and a second, bypass flow 401. The main flow 400 flows through the main channel 20 from the first fluid connection 22 to the second fluid connection 24 (or vice versa), and the bypass flow 401 flows through the bypass channel 305 from the first fluid connection 22 to the second fluid connection 24 (or vice versa).

A flow member 281 is arranged in the bypass channel 305. The flow member is arranged at an equal flow distance from the first fluid connection 22 as from the second fluid connection 24, as is the return flow passage 50. The branch flow passage 30 starts at an upper side of the flow member 281. The return flow passage 50 returns in the main flow channel 20, while the branch flow passage 30 branches off from the bypass channel 305. The return flow passage 50 is arranged above the plane of the drawing in figure 31C and therefore not visible in fig. 31C. The branch flow passage enters the cylinder 74 at the cylinder entry location 96, which is located above the horizontal main flow channel 20.

The flow member 281 comprises a first inclined guiding surface 282 and a second inclined guiding surface 283. If the main flow flows in the first direction 93, i.e. from the first fluid connection 22 to the second fluid connection 24, the bypass flow flows through the bypass flow channel section 301 and the first inclined guiding surface 282 urges a portion of the bypass flow upwards into the branch flow passage 30. If the main flow flows in the second direction 94, i.e. from the second fluid connection 24 to the first fluid connection 22, the bypass flow flows via bypass flow channel section 302 and the second inclined guiding surface 283 urges liquid upwards into the branch flow passage 30. At the upper end of the flow member 281, the first guiding surface 282 and the second guiding surface 283 come together. In this way the degassing device is bidirectional and works for both flow directions of the main flow.

In the closed state shown in fig. 31C, the entire bypass flow 401 flows through the bypass channel 305 from the first fluid connection 22 to the second fluid connection 24 and no branch flow is branched off from the bypass flow in the bypass channel. The entire bypass flow 401 flows over the flow member 281 to the fluid connection 22, 24 which functions as the exit. Some hydraulic resistance is present at the flow member 281, but this is acceptable. The main flow 400 is larger than the bypass flow 401.

Turning to fig. 31D, a situation is shown in which the at least one valve is open and a part (the branch flow 402) of the bypass flow flows through the degasification zone in order to be degasified. The branch flow 402 is branched off from the bypass flow 401. In this situation there may still be a bypass flow 401 which flows to the fluid connection which functions as the exit, but this bypass flow 401 will be smaller than when the degasification zone is closed. The branch flow 402 enters the degasification zone and returns into the main flow 400 via the return flow passage 50. In another embodiment, the entire bypass flow may be fed through the degasification zone when the valve is open. This also falls within the scope of the invention.

Without intending to be limiting, it is envisaged that about 20-35 percent, more in particular 25-30 percent of the total flow which flows through the manifold or main flow channel is branched off. In this way the liquid in the degasification zone may be refreshed relatively quickly for a next cycle. The refreshing step may be carried out in a time period of 30 seconds to 2 minutes, for instance in about one minute.

The terms "a" or "an", as used herein, are defined as one or more than one. The term plurality, as used herein, is defined as two or more than two. The term another, as used herein, is defined as at least a second or more. The terms including and/or having, as used herein, are defined as comprising i.e., open language, not excluding other elements or steps.

Any reference signs in the claims should not be construed as limiting the scope of the claims or the invention. It will be recognized that a specific embodiment as claimed may not achieve all of the stated objects.

The mere fact that certain measures are recited in mutually different dependent claims does not indicate that a combination of these measures cannot be used to advantage.

White lines between text paragraphs in the text above indicate that the technical features presented in the paragraph may be considered independent from technical features discussed in a preceding paragraph or in a subsequent paragraph.

## Claims

1. Degassing device (10) for degassing a gas-containing liquid in a cooling or heating installation, the degassing device comprising:
- a manifold (405) extending between a first fluid connection (22) and a second fluid connection (24), wherein in operation a flow of liquid flows through the manifold from the first fluid connection to the second fluid connection or vice versa,
- at least one flow passage (15) extending from the manifold to a degasification zone (42), the flow passage being configured to allow fluid communication between the manifold and the degasification zone,
- a degasification housing (40) defining an inner volume, wherein the inner volume substantially corresponds to the degasification zone,
- a pressure reduction device (70) connected to the degasification housing, wherein during operation, the pressure reduction device is configured to lower the pressure in the degasification zone relative to the pressure of the flow in the manifold, wherein:
∘ the pressure reduction device comprises a piston (72), a cylinder (74), and a piston actuator (76) and wherein the piston is moveable between an extended idle pressure position (722) and a retracted low pressure position (724) and wherein a frontal cylinder volume (743) in front of the cylinder is in fluid communication with the inner volume and the degasification zone comprises the frontal cylinder volume,
∘ in the low pressure position of the piston the degasification zone extends into the cylinder and is larger than in the idle pressure position of the piston,
∘ the degasification zone is delimited by the degasification housing, and by at least part of an outer surface of the piston and/or by at least a part of the inner surface of the cylinder,
- at least one valve (60; 60A, 60B) which is moveable between a closed position (62) and an open position (64), wherein in the closed position the at least one valve obstructs the flow passage, and closes off the degasification zone from the flow in the manifold and wherein in the open position the at least one valve does not obstruct the flow passage,
- a gas outlet (80) in the degasification housing, the gas outlet comprising:
∘ an outlet tube (82) and an outlet closing body (84, 87, 841, 843), wherein the outlet tube is closable by the outlet closing body,
∘ an overflow valve (85) defining a gas outlet opening (862), wherein the overflow valve is configured to close the gas outlet opening when a liquid level in the degassing device is higher than an overflow threshold level (89), and wherein the overflow threshold level (89) is higher than the outlet closing body,
- a control unit (90) to control at least the movement of the piston in order to carry out a degassing cycle,
wherein the control unit is configured to carry out a degassing cycle, by carrying out:
• a pressure reduction step, during which the gas outlet and the at least one valve are closed, wherein the pressure reduction device is configured to degas the gas-containing liquid by reducing the pressure, wherein at a start of the pressure reduction step, the liquid level in the degassing device is at the overflow threshold level and the outlet closing body closes off the outlet tube before the liquid level falls below the outlet tube,
• a gas expulsion step, during which the pressure in the degasification zone is increased and separated gas is passed through the outlet tube and the gas outlet opening.

2. Degassing device according to claim 1, wherein the outlet closing body comprises a gas outlet valve (87), wherein the gas outlet valve allows gas and/or liquid to flow between the outside and the degasification zone in an open state and closes off the degasification zone in a closed position, in particular the gas outlet valve being a ball valve or a non-return valve.

3. Degassing device according to claim 1, wherein:
a. the outlet closing body comprises an outlet closing non-return valve (843), and the outlet closing non-return valve is preferably actuated by an actuator,
b. the piston comprises an actuator end (728),
c. the outlet closing non-return valve is actuated by the actuator end (728) of the piston, wherein when the piston is moved to the idle pressure position, the actuator end moves the outlet closing non-return valve to the open position, and wherein when the piston is moved to the retracted position, the outlet closing non-return valve is allowed to move to the closed position.

4. Degassing device according to claim 1, wherein the gas outlet further comprises a floater chamber (86) and a floater moveable between a floating position (842) and a lower position (844), wherein a lower part of the floater forms at least part of the outlet closing body, wherein in particular an upper part of the floater above the liquid level does not form part of the outlet closing body, wherein when liquid levels drops below a predetermined liquid level (88), the outlet closing body engages an end of the outlet tube in the lower position, closing off the outlet tube.

5. Degassing device according to the preceding claim, wherein the floater chamber comprises the overflow valve (85) defining a gas outlet opening (862) and wherein when a liquid level is higher than the overflow threshold level (89), the outlet closing body is moved to an upper position (846), closing the overflow valve.

6. Degassing device according to claim 4 or 5, wherein the outlet closing body comprises a protrusion (83) extending from the floater, the protrusion being configured to close off the outlet tube and being located on a lower side (832) of the floater, and wherein an outer dimension of the protrusion substantially matches an inner dimension of the outlet tube.

7. Degassing device according to any of claims 4 - 6, wherein the outlet closing body comprises an O-ring or a double lip seal to close off the outlet tube in the lower position.

8. Degassing device according to any of the preceding claims, wherein the at least one valve comprises a first valve (60A) which is moveable between the closed position and the open position, wherein in the closed position the first valve obstructs the at least one flow passage and closes off the degasification zone from the manifold and wherein in the open position the first valve does not obstruct the at least one flow passage, wherein the first valve is integrated in the piston, wherein the piston comprises a part (729) which obstructs the flow passage in the low pressure position, wherein the movement of the piston from the idle pressure position towards the low pressure position moves the first valve from the open position to an idle closed position.

9. Degassing device according to the preceding claim, wherein the piston is configured to obstruct the flow passage in at least one position between the idle pressure position and the low pressure position.

10. Degassing device according to any of the preceding claims, wherein the degassing device comprises two flow passages, a first flow passage being a branch flow passage (30), the branch flow passage being configured to branch off a branch flow from the flow in the manifold, and a second flow passage being a return flow passage (50) extending between the degasification zone and the manifold, the return flow channel being configured to return a return flow to the manifold.

11. Method for degassing a gas-containing liquid in a cooling or heating installation by using a degassing device (10) according to any of the preceding claims, wherein the method comprises the steps:
a) passing a main flow of liquid into the manifold via the first fluid connection or the second fluid connection, preferably passing the main flow through the manifold from the first fluid connection to the second fluid connection or vice versa,
b) branching off a portion of the main flow through the at least one flow passage,
c) moving the at least one valve to the respective closed position, thereby obstructing the at least one flow passage and closing off the degasification zone from the manifold,
d) closing the gas outlet,
e) operating the pressure reduction device to lower the pressure in the degasification zone relative to the pressure in the manifold by moving the piston from the extended idle pressure position to the retracted low pressure position, wherein the degasification zone is delimited by the degasification housing and the piston,
f) opening the at least one valve and the gas outlet,
wherein the degassing cycle comprises a pressure reduction step comprising steps c), d), and e), and comprises a gas expulsion step comprising step f), wherein,
- during the pressure reduction step, the gas outlet and the at least one valve are closed, wherein the pressure reduction device is configured to degas the gas-containing liquid by reducing the pressure, wherein at a start of the pressure reduction step, a liquid level in the degassing device is at the overflow threshold level and the outlet closing body closes off the outlet tube before the liquid level falls below the outlet tube,
- during the gas expulsion step, the pressure in the degasification zone is increased and separated gas is passed through the outlet tube and the gas outlet opening.

12. Method according to the preceding claim, wherein at least part of the outlet closing body is formed by a lower part of a floater and wherein when a liquid level is lower than a predetermined level (88), the outlet closing body closes off a gas outlet tube (82).

13. Method according to claim 11, wherein:
a. the outlet closing body comprises an outlet closing non-return valve (843), and the outlet closing non-return valve is preferably actuated by an actuator,
b. the piston comprises an actuator end (728),
c. the outlet closing non-return valve is preferably actuated by the actuator end (728) of the piston, wherein when the piston is moved to the idle pressure position, the actuator end moves the outlet closing non-return valve to the open position, and wherein when the piston is moved to the retracted position, the outlet closing non-return valve is allowed to move to the closed position.

14. Method for testing a degassing device (10) for degassing a gas-containing liquid in a cooling or heating installation, the degassing device comprising the features of claim 1, the control unit (90) comprising a first and/or a second test module, connected to a pressure sensor and configured to receive a pressure difference signal from the pressure sensor,
wherein the method comprises the steps:
a) closing the at least one valve and measuring a first pressure in the degasification housing with the pressure sensor,
b) measuring a second pressure in the degasification housing with the pressure sensor after a period of time,
c) comparing the second pressure with the first pressure by the control unit to determine a difference,
wherein a difference signal is generated by the control unit when a difference between the first pressure and the second pressure is present.

15. Method for testing a degassing device according to the preceding claim, wherein step
a) comprises the sequential steps of:
a) 1) closing the at least one valve,
a) 2) operating the pressure reduction device to reduce or increase the pressure inside the degasification housing,
a) 3) measuring the first pressure, and wherein the difference signal which is generated by the control unit when the difference between the first pressure and the second pressure is indicative of a leak in the degasification housing which allows liquid and/or gas to escape out of the degasification housing.

## Patentansprüche

1. Entgasungsvorrichtung (10) zum Entgasen einer gashaltigen Flüssigkeit in einer Kühl- oder Heizanlage, wobei die Entgasungsvorrichtung Folgendes umfasst:
- einen Verteiler (405), der sich zwischen einem ersten Fluidanschluss (22) und einem zweiten Fluidanschluss (24) erstreckt, wobei im Betrieb eine Flüssigkeitsströmung durch den Verteiler von dem ersten Fluidanschluss zu dem zweiten Fluidanschluss oder umgekehrt strömt,
- mindestens einen Strömungsdurchgang (15), der sich von dem Verteiler zu einer Entgasungszone (42) erstreckt, wobei der Strömungsdurchgang dazu ausgelegt ist, eine Fluidverbindung zwischen dem Verteiler und der Entgasungszone zu ermöglichen,
- ein Entgasungsgehäuse (40), das ein Innenvolumen definiert, wobei das Innenvolumen im Wesentlichen der Entgasungszone entspricht,
- eine Druckreduziervorrichtung (70), die mit dem Entgasungsgehäuse verbunden ist, wobei die Druckreduziervorrichtung während des Betriebs dazu ausgelegt ist, den Druck in der Entgasungszone relativ zum Druck in der Strömung in dem Verteiler zu senken, wobei:
∘ die Druckreduziervorrichtung einen Kolben (72), einen Zylinder (74) und einen Kolbenaktuator (76) umfasst und wobei der Kolben zwischen einer ausgefahrenen Leerlaufdruckposition (722) und einer zurückgezogenen Niederdruckposition (724) beweglich ist und wobei ein vorderes Zylindervolumen (743) vor dem Zylinder in Fluidverbindung mit dem Innenvolumen steht und die Entgasungszone das vordere Zylindervolumen umfasst,
∘ wobei sich in der Niederdruckposition des Kolbens die Entgasungszone in den Zylinder erstreckt und größer als in der Leerlaufdruckposition des Kolbens ist,
∘ wobei die Entgasungszone durch das Entgasungsgehäuse und durch mindestens einen Teil einer Außenfläche des Kolbens und/oder durch mindestens einen Teil der Innenfläche des Zylinders begrenzt ist,
- mindestens ein Ventil (60; 60A, 60B), das zwischen einer geschlossenen Position (62) und einer offenen Position (64) beweglich ist, wobei das mindestens eine Ventil in der geschlossenen Position den Strömungsdurchgang sperrt und die Entgasungszone von der Strömung in dem Verteiler verschließt und wobei das mindestens eine Ventil in der offenen Position den Strömungsdurchgang nicht sperrt,
- einen Gasauslass (80) in dem Entgasungsgehäuse, wobei der Gasauslass Folgendes umfasst:
∘ ein Auslassrohr (82) und einen Auslassschließkörper (84, 87, 841, 843), wobei das Auslassrohr durch den Auslassschließkörper verschließbar ist, ∘ ein Überströmventil (85), das eine Gasauslassöffnung (862) definiert, wobei das Überströmventil dazu ausgelegt ist, die Gasauslassöffnung zu schließen, wenn ein Flüssigkeitsstand in der Entgasungsvorrichtung höher als ein Überströmschwellenstand (89) ist, und wobei der Überströmschwellenstand (89) höher als der Auslassschließkörper ist,
- eine Steuereinheit (90) zum Steuern mindestens der Bewegung des Kolbens, um einen Entgasungszyklus auszuführen,
wobei die Steuereinheit dazu ausgelegt ist, einen Entgasungszyklus auszuführen, durch Ausführen von:
• einem Druckreduzierungsschritt, bei dem der Gasauslass und das mindestens eine Ventil geschlossen sind, wobei die Druckreduziervorrichtung dazu ausgelegt ist, die gashaltige Flüssigkeit durch Reduzieren des Drucks zu entgasen, wobei zu Beginn des Druckreduzierungsschritts der Flüssigkeitsstand in der Entgasungsvorrichtung auf dem Überströmschwellenstand ist und der Auslassschließkörper das Auslassrohr verschließt, bevor der Flüssigkeitsstand unter das Auslassrohr sinkt,
• einen Gasausstoßschritt, bei dem der Druck in der Entgasungszone erhöht wird und abgeschiedenes Gas durch das Auslassrohr und die Gasauslassöffnung geleitet wird.

2. Entgasungsvorrichtung nach Anspruch 1, wobei der Auslassschließkörper ein Gasauslassventil (87) umfasst, wobei das Gasauslassventil in einem offenen Zustand ermöglicht, dass Gas und/oder Flüssigkeit zwischen der Außenseite und der Entgasungszone strömt, und die Entgasungszone in einer geschlossenen Position verschließt, wobei insbesondere das Gasauslassventil ein Kugelventil oder ein Rückschlagventil ist.

3. Entgasungsvorrichtung nach Anspruch 1, wobei:
a. der Auslassschließkörper ein Auslassschließrückschlagventil (843) umfasst und das Auslassschließrückschlagventil vorzugsweise durch einen Aktuator betätigt wird,
b. der Kolben ein Aktuatorende (728) umfasst,
c. das Auslassschließrückschlagventil durch das Aktuatorende (728) des Kolbens betätigt wird, wobei, wenn der Kolben in die Leerlaufdruckposition bewegt wird, das Aktuatorende das Auslassschließrückschlagventil in die offene Position bewegt, und wobei, wenn der Kolben in die zurückgezogene Position bewegt wird, dem Auslassschließrückschlagventil ermöglicht wird, sich in die geschlossene Position zu bewegen.

4. Entgasungsvorrichtung nach Anspruch 1, wobei der Gasauslass ferner eine Schwimmerkammer (86) und einen Schwimmer umfasst, der zwischen einer Schwimmposition (842) und einer unteren Position (844) beweglich ist, wobei ein unterer Teil des Schwimmers mindestens einen Teil des Auslassschließkörpers bildet, wobei insbesondere ein oberer Teil des Schwimmers oberhalb des Flüssigkeitsstands keinen Teil des Auslassschließkörpers bildet, wobei, wenn Flüssigkeitsstände unter einen vorbestimmten Flüssigkeitsstand (88) fallen, der Auslassschließkörper mit einem Ende des Auslassrohrs in der unteren Position in Eingriff kommt und das Auslassrohr verschließt.

5. Entgasungsvorrichtung nach dem vorhergehenden Anspruch, wobei die Schwimmerkammer das Überströmventil (85) umfasst, das eine Gasauslassöffnung (862) definiert, und wobei, wenn ein Flüssigkeitsstand höher als der Überströmschwellenstand (89) ist, der Auslassschließkörper in eine obere Position (846) bewegt wird, wodurch das Überströmventil geschlossen wird.

6. Entgasungsvorrichtung nach Anspruch 4 oder 5, wobei der Auslassschließkörper einen Vorsprung (83) umfasst, der sich von dem Schwimmer erstreckt, wobei der Vorsprung dazu ausgelegt ist, das Auslassrohr zu verschließen, und sich an einer unteren Seite (832) des Schwimmers befindet, und wobei eine Außenabmessung des Vorsprungs im Wesentlichen einer Innenabmessung des Auslassrohrs entspricht.

7. Entgasungsvorrichtung nach einem der Ansprüche 4 - 6, wobei der Auslassschließkörper einen O-Ring oder eine Doppellippendichtung umfasst, um das Auslassrohr in der unteren Position zu verschließen.

8. Entgasungsvorrichtung nach einem der vorhergehenden Ansprüche, wobei das mindestens eine Ventil ein erstes Ventil (60A) umfasst, das zwischen der geschlossenen Position und der offenen Position beweglich ist, wobei das erste Ventil in der geschlossenen Position den mindestens einen Strömungsdurchgang versperrt und die Entgasungszone von dem Verteiler verschließt, und wobei das erste Ventil in der offenen Position den mindestens einen Strömungsdurchgang nicht versperrt, wobei das erste Ventil in den Kolben integriert ist, wobei der Kolben ein Teil (729) umfasst, das den Strömungskanal in der Niederdruckposition blockiert, wobei die Bewegung des Kolbens von der Leerlaufdruckposition in die Niederdruckposition das erste Ventil von der offenen Position in eine Leerlaufschließposition bewegt.

9. Entgasungsvorrichtung nach dem vorhergehenden Anspruch, wobei der Kolben dazu ausgelegt ist, den Strömungsdurchgang in mindestens einer Position zwischen der Leerlaufdruckposition und der Niederdruckposition zu versperren.

10. Entgasungsvorrichtung nach einem der vorhergehenden Ansprüche, wobei die Entgasungsvorrichtung zwei Strömungsdurchgänge umfasst, wobei ein erster Strömungsdurchgang ein Abzweigströmungsdurchgang (30) ist, wobei der Abzweigströmungsdurchgang dazu ausgelegt ist, einen Abzweigstrom von der Strömung in dem Verteiler abzuzweigen, und ein zweiter Strömungsdurchgang ein Rückflussdurchgang (50) ist, der sich zwischen der Entgasungszone und dem Verteiler erstreckt, wobei der Rückflusskanal dazu ausgelegt ist, einen Rückfluss zu dem Verteiler zurückzuführen.

11. Verfahren zum Entgasen einer gashaltigen Flüssigkeit in einer Kühl- oder Heizanlage unter Verwendung einer Entgasungsvorrichtung (10) nach einem der vorhergehenden Ansprüche, wobei das Verfahren die folgenden Schritte umfasst:
a) Leiten eines Hauptstroms von Flüssigkeit in den Verteiler über die erste Fluidverbindung oder die zweite Fluidverbindung, vorzugsweise Leiten des Hauptstroms durch den Verteiler von der ersten Fluidverbindung zu der zweiten Fluidverbindung oder umgekehrt,
b) Abzweigen eines Teils des Hauptstroms durch den mindestens einen Strömungsdurchgang,
c) Bewegen des mindestens einen Ventils in die jeweilige geschlossene Position, wodurch der mindestens eine Strömungsdurchgang versperrt und die Entgasungszone von dem Verteiler verschlossen wird,
d) Schließen des Gasauslasses,
e) Betreiben der Druckreduziervorrichtung, um den Druck in der Entgasungszone relativ zum Druck in dem Verteiler zu senken, durch Bewegen des Kolbens von der ausgefahrenen Leerlaufdruckposition in die zurückgezogene Niederdruckposition, wobei die Entgasungszone durch das Entgasungsgehäuse und den Kolben begrenzt ist,
f) Öffnen des mindestens einen Ventils und des Gasauslasses,
wobei der Entgasungszyklus einen Druckreduzierungsschritt umfasst, der die Schritte c), d) und e) umfasst, und einen Gasausstoßschritt umfasst, der den Schritt f) umfasst, wobei
- während des Druckreduzierungsschritts der Gasauslass und das mindestens eine Ventil geschlossen sind, wobei die Druckreduziervorrichtung dazu ausgelegt ist, die gashaltige Flüssigkeit durch Reduzieren des Drucks zu entgasen, wobei zu Beginn des Druckreduzierungsschritts ein Flüssigkeitsstand in der Entgasungsvorrichtung auf dem Überströmschwellenstand ist und der Auslassschließkörper das Auslassrohr an der Schließposition verschließt, bevor der Flüssigkeitsstand unter das Auslassrohr sinkt,
- während des Gasausstoßschritts der Druck in der Entgasungszone erhöht wird und abgeschiedenes Gas durch das Auslassrohr und die Gasauslassöffnung geleitet wird.

12. Verfahren nach dem vorhergehenden Anspruch, wobei zumindest ein Teil des Auslassschließkörpers durch einen unteren Teil eines Schwimmers gebildet wird und wobei, wenn ein Flüssigkeitsstand niedriger als ein vorbestimmter Stand (88) ist, der Auslassschließkörper ein Gasauslassrohr (82) verschließt.

13. Verfahren nach Anspruch 11, wobei:
a. der Auslassschließkörper ein Auslassschließrückschlagventil (843) umfasst und das Auslassschließrückschlagventil vorzugsweise durch einen Aktuator betätigt wird,
b. der Kolben ein Aktuatorende (728) umfasst,
c. das Auslassschließrückschlagventil vorzugsweise durch das Aktuatorende (728) des Kolbens betätigt wird, wobei, wenn der Kolben in die Leerlaufdruckposition bewegt wird, das Aktuatorende das Auslassschließrückschlagventil in die offene Position bewegt, und wobei, wenn der Kolben in die zurückgezogene Position bewegt wird, dem Auslassschließrückschlagventil ermöglicht wird, sich in die geschlossene Position zu bewegen.

14. Verfahren zum Testen einer Entgasungsvorrichtung (10) zum Entgasen einer gashaltigen Flüssigkeit in einer Kühl- oder Heizanlage, wobei die Entgasungsvorrichtung die Merkmale von Anspruch 1 umfasst, wobei die Steuereinheit (90) ein erstes und/oder ein zweites Testmodul umfasst, das mit einem Drucksensor verbunden ist und dazu ausgelegt ist, ein Druckdifferenzsignal von dem Drucksensor zu empfangen,
wobei das Verfahren die folgenden Schritte umfasst:
a) Schließen des mindestens einen Ventils und Messen eines ersten Drucks in dem Entgasungsgehäuse mit dem Drucksensor,
b) Messen eines zweiten Drucks in dem Entgasungsgehäuse mit dem Drucksensor nach einer Zeitspanne,
c) Vergleichen des zweiten Drucks mit dem ersten Druck durch die Steuereinheit, um eine Differenz zu bestimmen,
wobei ein Differenzsignal durch die Steuereinheit erzeugt wird, wenn eine Differenz zwischen dem ersten Druck und dem zweiten Druck vorhanden ist.

15. Verfahren zum Testen einer Entgasungsvorrichtung nach dem vorhergehenden Anspruch, wobei Schritt a) die folgenden sequentiellen Schritte umfasst:
a) 1) Schließen des mindestens einen Ventils,
a) 2) Betreiben der Druckreduziervorrichtung, um den Druck im Entgasungsgehäuse zu verringern oder zu erhöhen,
a) 3) Messen des ersten Drucks, und wobei das Differenzsignal, das von der Steuereinheit erzeugt wird, wenn die Differenz zwischen dem ersten Druck und dem zweiten Druck ein Leck in dem Entgasungsgehäuse anzeigt, das es Flüssigkeit und/oder Gas ermöglicht, aus dem Entgasungsgehäuse zu entweichen.

## Revendications

1. Dispositif (10) de dégazage pour dégazer un liquide contenant du gaz dans une installation de refroidissement ou de chauffage, le dispositif de dégazage comprenant :
- un collecteur (405) s'étendant entre une première liaison fluidique (22) et une deuxième liaison fluidique (24), dans lequel en cours de fonctionnement, un écoulement de liquide s'écoule à travers le collecteur depuis la première liaison fluidique vers la deuxième liaison fluidique ou inversement,
- au moins un passage (15) d'écoulement s'étendant du collecteur vers une zone de dégazage (42), le passage d'écoulement étant configuré pour permettre une communication fluidique entre le collecteur et la zone de dégazage,
- une enceinte (40) de dégazage définissant un volume intérieur, le volume intérieur correspondant sensiblement à la zone de dégazage,
- un dispositif (70) de réduction de pression relié à l'enceinte de dégazage, le dispositif de réduction de pression étant, en cours de fonctionnement, configuré pour abaisser la pression dans la zone de dégazage par rapport à la pression de l'écoulement dans le collecteur, dans lequel :
∘ le dispositif de réduction de pression comprend un piston (72), un cylindre (74) et un actionneur de piston (76), le piston étant mobile entre une position de pression au repos étendue (722) et une position de basse pression rétractée (724) et un volume cylindrique frontal (743) situé devant le cylindre étant en communication fluidique avec le volume intérieur et la zone de dégazage comprenant le volume cylindrique frontal,
∘ la zone de dégazage, dans la position de basse pression du piston, s'étend jusque dans le cylindre et est plus grande que dans la position de pression au repos du piston,
∘ la zone de dégazage est délimitée par l'enceinte de dégazage, et par au moins une partie d'une surface extérieure du piston et/ou par au moins une partie de la surface intérieure du cylindre,
- au moins une soupape (60 ; 60A, 60B) mobile entre une position fermée (62) et une position ouverte (64), la ou les soupapes en position fermée obstruant le passage d'écoulement, et isolant la zone de dégazage de l'écoulement dans le collecteur et la ou les soupapes en position ouverte n'obstruant pas le passage d'écoulement,
- une sortie (80) de gaz dans l'enceinte de dégazage, la sortie de gaz comprenant :
∘ un tube (82) de sortie et un corps (84, 87, 841, 843) de fermeture de sortie, le tube de sortie pouvant être fermé par le corps de fermeture de sortie,
∘ une soupape (85) de trop-plein définissant une ouverture (862) de sortie de gaz, la soupape de trop-plein étant configurée pour fermer l'ouverture de sortie de gaz lorsqu'un niveau de liquide dans le dispositif de dégazage est supérieur à un niveau seuil de trop-plein (89), et dans lequel le niveau seuil de trop-plein (89) est plus haut que le corps de fermeture de sortie,
- une unité de commande (90) pour commander au moins le déplacement du piston afin de réaliser un cycle de dégazage,
dans lequel l'unité de commande est configurée pour exécuter un cycle de dégazage, en exécutant :
• une étape de réduction de pression pendant laquelle la sortie de gaz et la ou les soupapes sont fermées, le dispositif de réduction de pression étant configuré pour dégazer le liquide contenant du gaz en réduisant la pression, dans lequel, au début de l'étape de réduction de pression, un niveau de liquide dans le dispositif de dégazage est au niveau seuil de trop-plein et le corps de fermeture de sortie isole le tube de sortie avant que le niveau de liquide chute sous le tube de sortie,
• une étape d'expulsion de gaz pendant laquelle la pression dans la zone de dégazage est augmentée et un gaz séparé est acheminé à travers le tube de sortie et l'ouverture de sortie de gaz.

2. Dispositif de dégazage selon la revendication 1, dans lequel le corps de fermeture de sortie comprend une soupape (87) de sortie de gaz, la soupape de sortie de gaz permettant l'écoulement de gaz et/ou de liquide entre l'extérieur et la zone de dégazage dans un état ouvert et isolant la zone de dégazage dans une position fermée, la soupape de sortie de gaz étant en particulier une soupape à bille ou un clapet anti-retour.

3. Dispositif de dégazage selon la revendication 1, dans lequel :
a. le corps de fermeture de sortie comprend un clapet anti-retour (843) de fermeture de sortie, et le clapet anti-retour de fermeture de sortie est de préférence actionné par un actionneur,
b. le piston comprend une extrémité (728) d'actionneur,
c. le clapet anti-retour de fermeture de sortie est actionné par l'extrémité (728) d'actionneur du piston, dans lequel lorsque le piston est déplacé en position de pression au repos, l'extrémité d'actionneur déplace le clapet anti-retour de fermeture de sortie en position ouverte, et lorsque le piston est déplacé en position rétractée, le clapet anti-retour de fermeture de sortie peut se déplacer en position fermée.

4. Dispositif de dégazage selon la revendication 1, dans lequel la sortie de gaz comprend en outre une chambre (86) à flotteur et un flotteur mobile entre une position flottante (842) et une position basse (844), dans lequel une partie inférieure du flotteur forme au moins une partie du corps de fermeture de sortie, dans lequel en particulier une partie supérieure du flotteur au-dessus du niveau de liquide ne fait pas partie du corps de fermeture de sortie, dans lequel lorsque les niveaux de liquide chutent en dessous d'un niveau de liquide prédéterminé (88), le corps de fermeture de sortie vient en prise avec une extrémité du tube de sortie en position basse, isolant ainsi le tube de sortie.

5. Dispositif de dégazage selon la revendication précédente, dans lequel la chambre à flotteur comprend la soupape (85) de trop-plein définissant une ouverture (862) de sortie de gaz et dans lequel lorsqu'un niveau de liquide est supérieur au niveau seuil de trop-plein (89), le corps de fermeture de sortie est déplacé dans une position haute (846), fermant la soupape de trop-plein.

6. Dispositif de dégazage selon la revendication 4 ou 5, dans lequel le corps de fermeture de sortie comprend une saillie (83) s'étendant depuis le flotteur, la saillie étant configurée pour isoler le tube de sortie et étant située sur un côté inférieur (832) du flotteur, et une dimension extérieure de la saillie correspondant sensiblement à une dimension intérieure du tube de sortie.

7. Dispositif de dégazage selon l'une quelconque des revendications 4 à 6, dans lequel le corps de fermeture de sortie comprend un joint torique ou un joint à double lèvre pour isoler le tube de sortie dans la position basse.

8. Dispositif de dégazage selon l'une quelconque des revendications précédentes, dans lequel la ou les soupapes comprennent une première soupape (60A) qui est mobile entre la position fermée et la position ouverte, dans lequel, dans la position fermée, la première soupape obstrue le ou les passages d'écoulement et isole la zone de dégazage du collecteur et dans lequel, dans la position ouverte, la première soupape n'obstrue pas le ou les passages d'écoulement, dans lequel la première soupape est intégrée dans le piston, le piston comprenant une partie (729) qui obstrue le passage d'écoulement dans la position de basse pression, le déplacement du piston de la position de pression au repos vers la position de basse pression déplaçant la première soupape de la position ouverte à une position fermée de repos.

9. Dispositif de dégazage selon la revendication précédente, dans lequel le piston est configuré pour obstruer le passage d'écoulement dans au moins une position comprise entre la position de pression au repos et la position de basse pression.

10. Dispositif de dégazage selon l'une quelconque des revendications précédentes, le dispositif de dégazage comprenant deux passages d'écoulement, un premier passage d'écoulement étant un passage (30) d'écoulement dérivé, le passage d'écoulement dérivé étant configuré pour dériver un écoulement dérivé de l'écoulement du collecteur, et un deuxième passage d'écoulement étant un passage (50) d'écoulement de retour s'étendant entre la zone de dégazage et le collecteur, le canal d'écoulement de retour étant configuré pour renvoyer un écoulement de retour vers le collecteur.

11. Procédé de dégazage d'un liquide contenant du gaz dans une installation de refroidissement ou de chauffage en utilisant un dispositif (10) de dégazage selon l'une des revendications précédentes, le procédé comprenant les étapes suivantes :
a) passage d'un débit principal de liquide dans le collecteur par le biais de la première liaison fluidique ou de la deuxième liaison fluidique, de préférence, passage du débit principal à travers le collecteur depuis la première liaison fluidique vers la deuxième liaison fluidique ou inversement,
b) dérivation d'une partie de l'écoulement principal à travers le ou les passages d'écoulement,
c) déplacement de la ou des soupapes jusqu'à la position fermée respective, obstruant ainsi le ou les passages d'écoulement et isolant la zone de dégazage du collecteur,
d) fermeture de la sortie de gaz,
e) actionnement du dispositif de réduction de pression pour abaisser la pression dans la zone de dégazage par rapport à la pression dans le collecteur en déplaçant le piston de la position de pression au repos étendue à la position de basse pression rétractée, la zone de dégazage étant délimitée par l'enceinte de dégazage et le piston,
f) ouverture de la ou des soupapes et de la sortie de gaz,
dans lequel le cycle de dégazage comprend une étape de réduction de pression comprenant les étapes c), d), et e), et comprend une étape d'expulsion de gaz comprenant l'étape f), dans lequel,
- pendant l'étape de réduction de pression, la sortie de gaz et la ou les soupapes sont fermées, le dispositif de réduction de pression étant configuré pour dégazer le liquide contenant du gaz en réduisant la pression, dans lequel, au début de l'étape de réduction de pression, le niveau de liquide dans le dispositif de dégazage est au niveau seuil de trop-plein et le corps de fermeture de sortie isole le tube de sortie avant que le niveau de liquide chute sous le tube de sortie,
- pendant l'étape d'expulsion de gaz, la pression dans la zone de dégazage est augmentée et un gaz séparé est acheminé à travers le tube de sortie et l'ouverture de sortie de gaz.

12. Procédé selon la revendication précédente, dans lequel au moins une partie du corps de fermeture de sortie est formée par une partie inférieure d'un flotteur et dans lequel, lorsqu'un niveau de liquide est inférieur à un niveau prédéterminé (88), le corps de fermeture de sortie isole un tube (82) de sortie de gaz.

13. Procédé selon la revendication 11, dans lequel :
a. le corps de fermeture de sortie comprend un clapet anti-retour (843) de fermeture de sortie, et le clapet anti-retour de fermeture de sortie est de préférence actionné par un actionneur,
b. le piston comprend une extrémité (728) d'actionneur,
c. le clapet anti-retour de fermeture de sortie est de préférence actionné par l'extrémité (728) d'actionneur du piston, dans lequel lorsque le piston est déplacé en position de pression au repos, l'extrémité d'actionneur déplace le clapet anti-retour de fermeture de sortie en position ouverte, et lorsque le piston est déplacé en position rétractée, le clapet anti-retour de fermeture de sortie peut se déplacer en position fermée.

14. Procédé de test d'un dispositif de dégazage (10) pour dégazer un liquide contenant du gaz dans une installation de refroidissement ou de chauffage, le dispositif de dégazage comprenant les caractéristiques de la revendication 1, l'unité de commande (90) comprenant un premier et/ou un deuxième module de test, relié à un capteur de pression et configuré pour recevoir un signal de différence de pression du capteur de pression,
le procédé comprenant les étapes suivantes :
a) fermeture de la ou des soupapes et mesure d'une première pression dans l'enceinte de dégazage avec le capteur de pression,
b) mesure d'une deuxième pression dans l'enceinte de dégazage avec le capteur de pression après une durée,
c) comparaison de la deuxième pression avec la première pression par l'unité de commande pour déterminer une différence,
dans lequel un signal de différence est généré par l'unité de commande lorsqu'une différence entre la première pression et la deuxième pression est présente.

15. Procédé de test d'un dispositif de dégazage selon la revendication précédente, dans lequel l'étape a) comprend les étapes séquentielles suivantes :
a) 1) fermeture de la ou des soupapes,
a) 2) actionnement du dispositif de réduction de pression pour réduire ou augmenter la pression à l'intérieur de l'enceinte de dégazage,
a) 3) mesure de la première pression, et le signal de différence qui est généré par l'unité de commande en cas de différence entre la première pression et la deuxième pression étant indicatif d'une fuite dans l'enceinte de dégazage, ce qui permet au liquide et/ou au gaz de s'échapper hors de l'enceinte de dégazage.
